Europäisches Patentamt

European Patent Office

Office européen des brevets

(19)

(11) **EP 0 477 892 B1**

(12) # EUROPEAN PATENT SPECIFICATION

(45) Date of publication and mention
of the grant of the patent:
**08.01.1997 Bulletin 1997/02**

(51) Int Cl.6: **G11B 7/00**, G11B 7/125,
G11B 7/013

(21) Application number: **91116322.8**

(22) Date of filing: **25.09.1991**

(54) **Method of and apparatus for correcting edge interval of pit in optical recording/read-out apparatus**

Verfahren und Vorrichtung zur Korrektur des Lochkantenabstands einer optischen Aufzeichnungs/Wiedergabeeinrichtung

Méthode et appareil pour la correction de l'intervalle entre les creux dans un appareil optique d'enregistrement/reproduction

(84) Designated Contracting States:
**DE FR**

(30) Priority: **28.09.1990 JP 256904/90**

(43) Date of publication of application:
**01.04.1992 Bulletin 1992/14**

(73) Proprietor: **HITACHI, LTD.
Chiyoda-ku, Tokyo 101 (JP)**

(72) Inventors:
 • **Ide, Hiroshi
 Kodaira-shi (JP)**
 • **Maeda, Takeshi
 Kokubunji-shi (JP)**

 • **Saito, Atsushi
 Ichikawa-shi (JP)**

(74) Representative: **Beetz & Partner Patentanwälte
Steinsdorfstrasse 10
80538 München (DE)**

(56) References cited:
**EP-A- 0 126 682          EP-A- 0 289 004
EP-A- 0 388 271          US-A- 4 873 680**

 • **PATENT ABSTRACTS OF JAPAN vol. 13, no. 345 (P-909)3 August 1989 & JP-A-1 102 739**
 • **PATENT ABSTRACTS OF JAPAN vol. 8, no. 275 (P-321)15 December 1984 & JP-A-59 140 647**
 • **PATENT ABSTRACTS OF JAPAN vol. 10, no. 312 (P-509)23 October 1986 & JP-A-61 122 932**

## Description

The present invention relates to a method of and an apparatus for correcting a pit edge interval of record signals in an optical recording/read-out apparatus in which digital signals are recorded on a recording medium such as an optical disk and the recorded signals are read out therefrom wherein an edge interval is corrected for record signals written in the recording medium based on a power of the record signals and a record pattern written thereon immediately therebefore.

As a recording medium on which digital or digitalized signals are written, there has been used an optical disk. In the recording operation, a laser beam is focused onto a recording surface of the optical disk such that intensity of the focused light is varied in relation to information to be stored thereon.

In this connection, there has been used a pit edge recording method in which a laser power is modified for a recording operation on the disk so as to store information before and after the record mark, and hence two or more data items are recorded for a record mark, which efficiently develops a high-density recording operation.

According to the pit edge recording method, in general, when a laser utilized in the recording operation has a low power, the contour of the record mark thus created is likely to be unstable. In addition, when the recording speed is altered, the amount of thermal energy applied to a unitary area and the thermal distribution are varied, thereby disadvantageously generating various shapes of the record marks. In consequence, actually, in order to create a stable or uniform shape of the record mark for the recording and read-out operations, according to the "Application of Pit Edge Recording on PbTbSe Thin Film" written in page 4-176 of the Digest of the National Conference on 70th Anniversary of Foundation of the IECE of Japan, the operation is accomplished, for example, by adjusting the laser pulse length as follows. Namely, the recording laser is produced with an intensity slightly higher than the usual intensity such that the laser pulse length is shortened in the recording operation to suppress the excessive portion of the mark length associated with the line speed of the laser; moreover, in the read-out operation, the pulse length is reduced in a signal undergone the binarization.

Moreover, in general, the contour of the recorded mark primarily depends on the recording sensitivity and the thermal conductivity of the recording medium, the laser beam intensity distribution of the laser beam used for the recording operation, the wavefront aberration leading to a state where the actual focal state cannot be developed even when the laser beam is focused, and the like. Consequently, when a combination of the recording apparatus and the recording medium varies, the characteristics of the recording and read-out operations are also changed. In addition, in the recording operation, the level of the laser power of the recording apparatus changes as the time lapses. Even if an automatic power control (APC) mechanism is disposed to automatically control the laser power, there cannot be avoided a laser power level deviation in a certain range. This factor also varies the recording and read-out characteristics, which leads to a change in the record mark length in the recording operation and to a variation in a pulse interval of read-out signals in the read-out operation.

In consequence, for the recording apparatus of which the correction value of the laser pulse length and the laser power are respectively set to fixed values before delivery thereof to the users, the design specifications are decided depending on values of recording and read-out characteristics measured by use of many combinations of various recording media and recording apparatuses. In this operation, in order to guarantee a high reliability of the detection in any situations In consideration of a range of deviation of the recording and read-out characteristics due to the various combinations above, the recording density is determined with a large margin. Namely, the decision of the specifications is conducted with a sacrifice of the recording density.

In order to overcome this difficulty, there has been proposed a method in which to absorb the deviation in the characteristics due to the combinations of the recording media and the recording apparatus so as to develop a high recording density, a test pattern is beforehand recorded on an optical disk such that the test pattern is read out therefrom to attain information based thereon for adjustment of the recording conditions. For example, in an apparatus described in the JP-A-61-239441, the laser power of the recording operation is adjusted and fixed to one level; in a device described in the JP-A-61-74178, an adjustment amount of the recording pulse width is adjusted and fixed to one amount independent of the recording pulse width; and in an apparatus described in the JP-A-61-304427, the fixed laser power of the recording operation, the fixed adjustment value related to and independent of the recording pulse width, and the automatic equalization coefficient of the read-out operation are simultaneously adjusted.

Furthermore, the recording operation of the optical disk is fundamentally accomplished through a thermal diffusion. Consequently, owing to preceding and following series of recording pulses associated with a record mark, the thermal distribution is diffused to cause a phenomenon in which the contour of the record mark is varied (to be called a thermal interference herebelow). This phenomenon also leads to a variation in the pulse interval of the read-out signals in the read-out operation. Consequently, in order to conduct an appropriate correction in the recording operation, the influence of the thermal interference is required to be taken into consideration. To cope therewith, according to the recording method described in the JP-A-63-48617, the width of the record signal is changed depending on an edge interval of the preceding record signal. This method however is attended with the following problem.

Namely, when it is desired to increase the recording density up to a level where the record mark contour and the interval between record marks are of a size similar to the size of a laser spot focused onto a surface of the recording film, the range where the influence of the thermal interference of the optical disk is exerted exceeds the minimum length of the record mark used. In other words, a series of laser pulses adopted for the previous recording operation exercise influence on the shift of the edge position of a record mark to be next recorded on the disk. Particularly, in a case of a recording medium which has a high recording sensitivity with respect to an intensity of a laser beam and on which the recording operation can be hence accomplished with a low laser power, a high thermal conductivity is developed in general and the thermal interference related thereto exerts influence thereon in a large range.

Moreover, in the adjustment method conducted in association with the edge interval of a record signal, since information related to the adjustment amount is preset in advance, the adjustment amount cannot be modified depending on a variation on the recording characteristic taking place in the course of the recording and the reading operation. In consequence, an adjusting error appears in relation to the discrepancy between the preset recording characteristic and the changed recording characteristic, which disadvantageously leads to an inappropriate adjustment.

On the other hand, in the method of attaining recording condition adjusting information as described in the three articles above, each of the recording laser power and the recording pulse width has an adjustment quantity of a single value. Consequently, it is impossible to minimize the variation of the recording mark length due to the thermal interference of which the magnitude varies depending on various record patterns.

Heretofore, since the signal read-out of reproducing system has a narrow frequency bandwidth, a pulse signal reproduced has a expanding skirt or base portion. In this situation, in order to reduce a linear interference occurred between neighborhood signals due to a superimposed portion thereof, a linear equalizer such as a transversal filter is used on the reproduction side in general in the field of the communications, the magnetic recording, etc.

However, the influence of the thermal diffusion appears in the read-out operation primarily in the form of a shift of the waveform along a direction of time. This is associated with a nonlinear interference component of an interference between codes, which cannot be simply expressed by use of a linear superimposition of fundamental waveforms related to the record information. In consequence, the component of the edge position variation due to the thermal interference occurring in the recording operation cannot be coped with the linear equalizer. Namely, actually, it is quite difficult for the system on the read-out side to appropriately treat the interference component in a real time manner.

Particularly, in a pit edge recording method achieving an opto-magnetic recording operation on a recording medium having a high thermal conductivity, the mark length is associated with a large shift component and hence it is required to take a large margin for the component. This inevitably necessitates the sacrifice of the recording density i.e. the higher recording density cannot be implemented.

It is therefore an object of the present invention to provide a method of and an apparatus for correcting a pit edge interval of record signals in an optical recording/read-out apparatus wherein in a pit edge recording method, a laser power and a pulse edge position are controlled to reduce the mark length variation due to influence of the thermal interference, thereby increasing the recording density, the signal transfer speed, and the recording and read-out reliability.

In the present invention, variations of the laser power and of a recording medium surface temperature (ambient temperature of an optical disk) are separately detected from an edge shift quantity of the recorded pit. The laser power and correction value of the pit edge position are corrected on the basis of the separately detected variations.

In order to achieve the object above, the edge interval of record signals are corrected in the following method.

When data is recorded on an optical disk, there is beforehand predicted various patterns which are considered to appear in the data recording operation later and which have n edge widths (n is an integer). A sequence of record patterns including various patterns above are recorded on the disk prior to the actual recording operation so as to determine a shift amount of an edge position of a read-out signal thereof with respect to an inherent record position thereof. Based on the result, there is produced a table containing relationships between each of the patterns and an edge shift amount associated therewith.

In an actual data recording operation, a record signal of data is collated with the patterns associated with the n edge widths stored in the table for each pattern, thereby correcting the edge width.

The correction method will next be described in more detail.

(a) A first record pattern having a predetermined duty ratio is recorded on an optical disk with a preset laser power. The recorded pattern is then read out therefrom so as to compare the read-out signal with the record signal to obtain and to determine a pulse length difference between the corresponding pulses.

(b) When the check result indicates that the difference is beyond an allowable range, the laser power is varied in a stepwise manner to record the first record pattern so as to check again the pulse length difference between the read-out signal and the record signal.

(c) Based on the result of the check, there is determined a laser power associated with the record signal of which the pulse length difference is found to be within the allowance, thereby determining the laser power to be used in a data recording operation.

(d) With the laser power thus obtained, a second record pattern including a combination of a pulse and a gap respectively having various kinds of lengths is recorded N times (N is an integer).

(e) In the read-out signal of the second record pattern, the second record pattern is further classified into a third pattern comprising an n consecutive pulses and gaps (n is an integer). For each of the third patterns, an ideal edge position associated with the record signal is compared with an edge position thereof to obtain a shift amount of the last edge of the third pattern.

(f) Relationships between the third patterns and the shift quantity of the last edge of each thereof are loaded in a table, which is then stored in a memory.

(g) For a signal pattern which comprises an n consecutive pulses and gaps and which has not been recognized as a third pattern, a relationship between the pattern and the shift amount of the last edge thereof is obtained through an interpolation with a measured value attained from the third pattern and is then additionally loaded in the table.

(h) In an actual data recording operation, a record signal associated with the data is collated with patterns in the table in the unit of n patterns so as to determine a pattern matching with the record signal. For the obtained pattern, the last edge thereof is corrected depending on the data stored in the table.

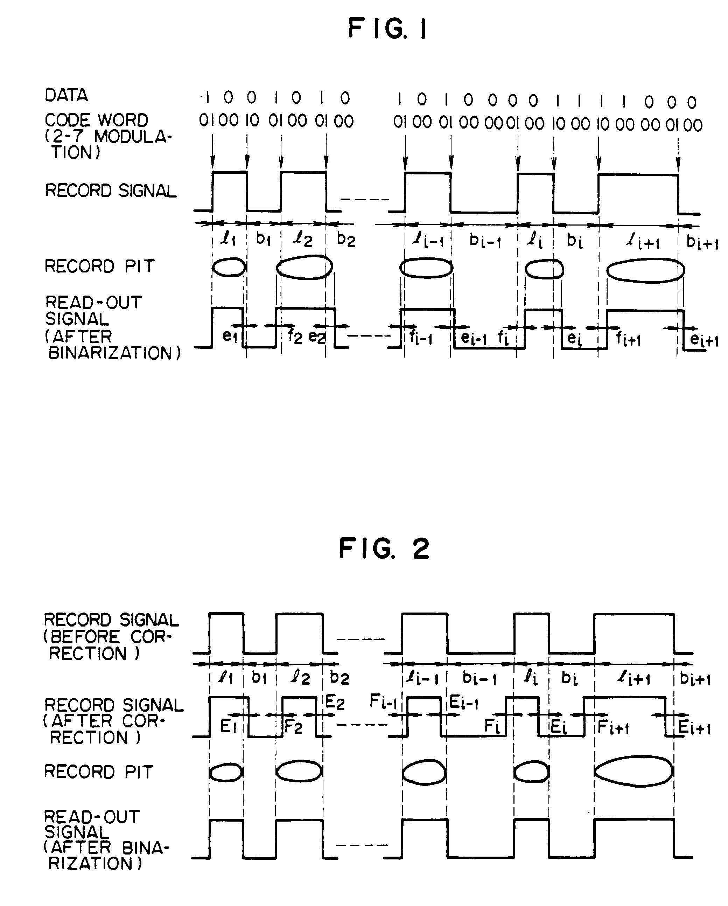

Fig. 1 shows an example of the variation of a record mark due to a thermal interference.

In this diagram, letters $f_i$ and $e_i$ stand for edge variations, respectively. When creating the table above, assuming that the third pattern comprises three pulses and a gap, the relationships are attained such that an edge shift quantity $e_i$ is produced for patterns $\ell_{i-1}$, $b_{i-1}$, and $\ell_i$; an edge shift quantity $f_{i+1}$ is created for patterns $b_{i-1}$, $\ell_i$, and $b_i$; and so on, thereby storing the attained results in the memory.

Subsequently, in order to attain a relationship between a variation in the recording medium surface temperature and a quantity of the record pit edge shift related to the variation, measurements are conducted to determine shift quantities of last edges of two different predetermined patterns 1 and 2, respectively. Although the data may be obtained by changing the temperature in the apparatus with an optical disk installed therein during the measurements, it is rather favorable to write the data on the optical disk in the optical disk manufacturing process such that when the optical disk is set to the apparatus, the data is read therefrom. In addition, to attain a relationship between a variation in the laser power and a quantity of the record pit edge shift associated with the variation, measurements are conducted to detect shift quantities of last edges of the two different predetermined patterns 1 and 2, respectively. These data items are stored in a memory of the controller.

When a write instruction is received to write actual data, the patterns 1 and 2 are written together with the actual data so as to check to determine whether an edge shift occurs in a read-out signal thereof. If this is the case, the causes of the edge shift, namely, the laser power variation quantity and the quantity of variation in the recording medium surface temperature are separately detected. These variation quantities can be obtained through computations based on the edge shift quantities respectively found in the patterns 1 and 2, beforehand collected relationships between the variation quantity in the recording medium surface temperature and the edge shift quantities of the patterns 1 and 2, and beforehand gathered relationships between the laser power variation quantity and the edge shift quantities of the patterns 1 and 2. If the variation quantity in the recording medium surface temperature is not exceeding a predetermined value, the laser power is set again; otherwise, data in the edge width adjusting table is updated so as to write the actual data by use of the corrected values of the table.

Fig. 2 shows an outline of the edge interval correction according to the present invention.

A record signal related to data to be recorded on the optical disk is collated with patterns loaded in the table such that edge intervals $\ell_1$, $b_1$, $\ell_2$, and $\ell_1$ are corrected to $\ell_1 + E_1$, $b_1 - E_1 + F_2$, $\ell_2 - E_2 - F_2$, and $\ell_i - E_i + F_i$, respectively. In this case, the edge correction quantity $E_i$ for the edge interval $\ell_i$ is obtained by collating patterns $\ell_{i-1} - E_{i-1} + F_{i-1}$, $b_{i-1} - F_i + E_{i-1}$, and $\ell_i + F_i$ with the contents of the table.

When pits are recorded on the optical disk based on the record signal thus corrected, the edge positions of the read-out signal are substantially equal to the associated edge positions of the record signal before the correction.

According to the present invention, in the pit edge recording method, the edges of the record mark can be more appropriately controlled to achieve a high-density recording operation; moreover, it is possible to absorb, for example, the deviation of the record mark length due to the recording characteristic difference related to the variation of the combination of the recording media and the recording apparatus and the influence of the thermal interference associated with different record patterns.

Moreover, thanks to the utilization of a plurality of recording characteristics measured through recording and read-out operations in various areas on a recording medium, the record correction can also be accomplished in an area associated with the different line speed.

In addition, when the recording characteristics are measured each time when the recording apparatus starts its operation, when a recording medium is replaced, when a predetermined period of time is elapsed, and/or in association with a change in a temperature on the recording surface or in the recording optical beam power, it is also possible to absorb the W variation with a lapse of time in the characteristics on the recording apparatus side.

The invention (which is specified in the appended claims) will now be described by way of examples and with reference to the accompanying drawings in which:

Fig. 1 is a schematic diagram showing a variation of record edges;
Fig. 2 is a diagram illustratively showing an outline of an edge interval correction according to the present invention.
Fig. 3 is a block diagram showing an optical recording/read-out apparatus to which the present invention is applied;
Fig. 4 is a circuit diagram showing in detail a timing detection circuit;
Fig. 5 is a graph showing waveforms developed in the timing detection circuit;
Fig. 6 is a detailed circuit diagram showing a laser power setting circuit;
Fig. 7 is a diagram showing a test pattern for measuring a recording characteristic;
Fig. 8A is a diagram showing in detail an edge interval judge circuit;
Fig. 8B is a diagram of a pattern used for obtaining data for an edge width adjusting table;
Fig. 9 is a detailed diagram showing a circuit for producing an edge width adjusting table;
Fig. 10 is a graph showing relationships between a record signal and a read-out signal associated with patterns respectively including pulses of various lengths and gaps;
Figs. 11A and 11B are diagrams illustratively showing a memory structure as a table;
Fig. 12 is a flowchart showing an operation in which a data position necessitating an interpolation is determined;
Fig. 13 is a flowchart showing the operation of the interpolation;
Fig. 14 is a diagram showing in detail an edge width adjusting circuit;
Fig. 15 is a graph showing an example of a correction in an actual data recording operation;
Figs. 16A and 16B are diagrams showing an example of an operation in which correction data is obtained from the table;
Fig. 17 is a detailed circuit diagram showing a laser driver circuit;
Fig. 18 is a diagram showing relation between the recording medium surface temperature and the length of the pit;
Fig. 19 is a graph showing relations between the variation of the laser power, variation of the recording medium surface temperature and the edge shift quantity; and
Fig. 20 is a flowchart showing an operation of the present invention.

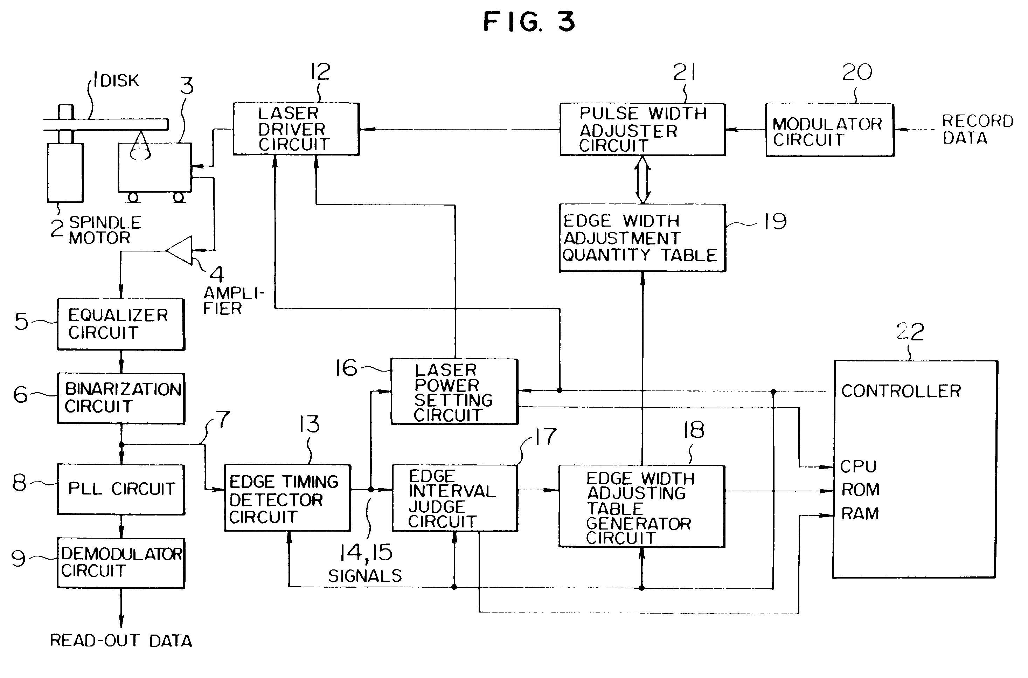

Fig. 3 is a block diagram showing the constitution of an optical recording/read-out apparatus according to the present invention.

The system of Fig. 3 includes an optical disk 1, a spindle motor 2, an optical pickup 3, an amplifier 4, an equalizer circuit 5, a binarization circuit 6, a phase locked loop (PLL) circuit 8, a demodulator circuit 9, and a modulator circuit 20. With respect to the modulator circuit 20, it may be of the same configuration and the same function as the associated component of the conventional optical disk device. Consequently, a redundant description thereof will be avoided.

Next, a description will be given of the operations of the blocks of Fig. 3 constituting the present invention.

An edge timing detection circuit 13 is used to detect each edge interval of a read-out signal.

An edge interval judge circuit 17 records N times (N is an integer) a predetermined record pattern comprising a combination of pulses of various kinds of lengths and gaps and processes a read-out signal reproduced from the recorded signal. This circuit measures an edge interval for each pulse and gap corresponding pulse and gap of which are detected every N pulses and gaps and obtains mean values of the edge intervals.

An edge width adjusting table generator circuit 18 creates an edge width adjustment quantity table 19 containing relationships between short patterns each consists of a combination of n pulses and gaps (n is an integer) and quantities of deviation of edge intervals associated with the patterns. For a pattern which has not been classified as the short pattern, an interpolation is conducted by use of measured data to determine a corresponding deviation quantity of the edge interval.

An edge width adjusting circuit 21 collates a pattern in each portion of a record signal generated in association with data to be recorded with patterns stored in the edge width adjusting table 19, thereby correcting the position of each edge based on the edge interval deviation quantity loaded in the table 19.

A laser power setting circuit 16 is adopted to detect an appropriate laser power to set the value thereof to a laser drive circuit 12.

The laser driver circuit 12 includes a laser power change function. Namely, this circuit 12 comprises a laser power setting circuit for an ordinary recording operation and develops a function to stepwise alter the laser power to attain an optimal laser power.

The controller 22 comprises a CPU and memory devices such as ROM and RAM. The controller 22 controls the switching of the operation modes, judging processing necessary in each circuit block and separately detecting processing of the variations of the laser power and of the recording medium surface temperature.

Next, a description will be given of the constitution and the operation in detail of the respective blocks.

[Edge timing detection circuit 13]

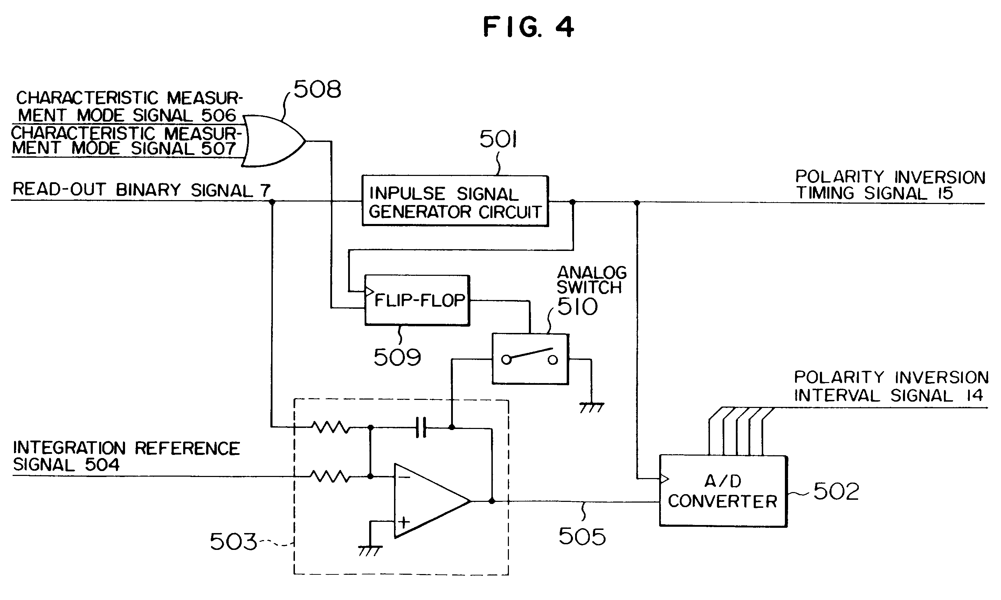

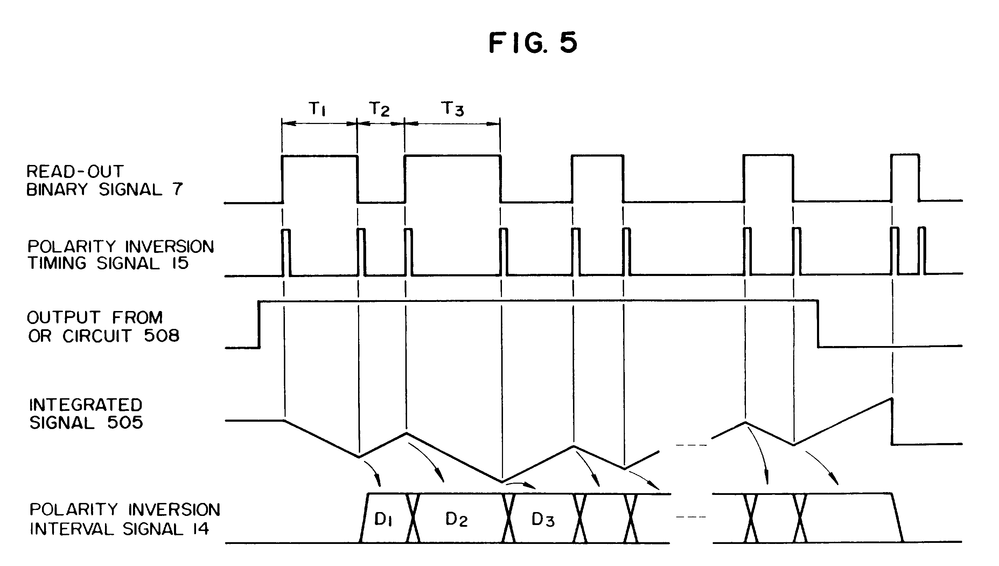

Fig. 4 shows the detailed circuit configuration of this circuit, whereas Fig. 5 shows waveforms of primary signals developed in this circuit.

The edge timing detection circuit 13 is disposed to process a binarized read-out signal 7 to detect a pulse length (a period of time from a rising portion of the signal to a falling portion thereof) and a gap length (a period of time from a falling portion of the signal to a rising portion thereof).

Basically, the read-out binary signal 7 is passed to an integrator circuit 503 comprising an amplifier to be transformed into an integrated signal 505, which is then converted by an analog-to-digital (A/D) converter 502 to be a polarity inversion interval signal 14 representing a digital quantity for an output to a subsequent circuit.

The integrated signal 505 represents a value associated with a quantity obtained by subtracting the total of the respective gap lengths from the total of the respective pulse lengths in a period of time from an initiation of the operation of the integrator 503 to the present point of time. Since, at each time when the polarity of the read-out binary signal 7 is inverted, a signal having an impulse-shaped waveform is inputted into the A/D converter 502 from an inpulse signal generator 501, the integrated signal 505 is converted into a digital signal at the timing above. As a result, for example, D1, D2, and D3 of the interval signal 14 (Fig. 5) respectively denote digital values associated with -T1, -T1 + T2, and -T1 + T2 - T3 of the binary signal 7. In this connection, the impulse waveform is also used as a polarity inversion timing signal 15 in other circuits.

Finally, an OR circuit 508, a flip-flop 509, and an analog switch 510 are used to specify an operation period of time for the integrator circuit 503.

[Laser power setting circuit 16]

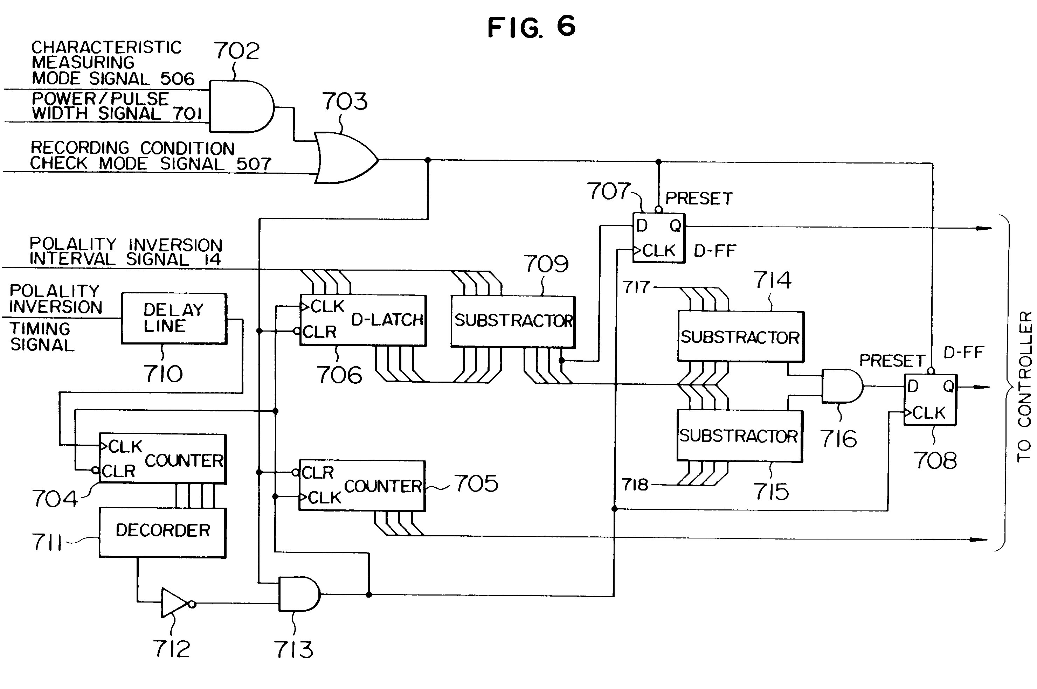

Fig. 6 shows the detailed configuration of this circuit.

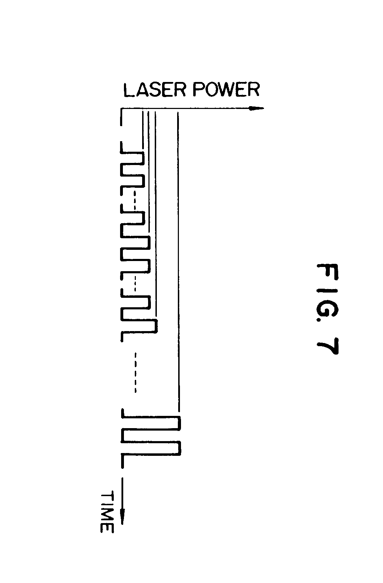

The laser power setting circuit 16 operates by using the polarity inversion interval signal 14 as a reference pulse. In the laser power check mode, the recording characteristic measuring test pattern (first record pattern) of Fig. 7 is recorded while the laser power is stepwise changed. Thereafter, the read-out signals thereof are checked to determine an optimal laser power. Moreover, in the recording condition check mode, the first record pattern is recorded with a predetermined laser power such that the read-out signal thereof is then checked to decide whether or not the present laser power is within a preset allowable range.

The first record pattern is constituted with a pulse sequence having a predetermined duty ratio. When the pulse sequence is associated with a minimum available edge interval, the optimal laser power can be detected with a high precision.

A latch circuit 706 and a subtractor circuit 709 are used to compute, in the laser power check mode, a duty ratio (a difference between a pulse length and a gap length) of a read-out signal of the first record pattern for each laser power. In the recording condition check mode, a duty ratio of a read-out signal of the first record pattern is obtained for the present laser power.

An AND circuit 702 and an OR circuit 703 are employed to specify a period of time for the operation of the laser power setting circuit 16 (in the laser power and recording condition check modes).

A delay line 710, a counter circuit 704, and a decoder 711 are utilized to detect a point of time when the laser power is stepwise altered in the laser power check mode so as to produce a pulse at the timing. A counter circuit 705 counts the pulses to notify the strength (which a sequential number assigned in a strength order) of the laser power signal being used.

A flip flop 707 judges a signal representing a sign bit of the subtractor circuit 709 to determine whether or not the laser power used to record the read-out signal being processed is higher than the optimal laser power. Since the first record pattern is recorded as shown in Fig. 7 with a laser power stepwise increased, the polarity of the output signal from the flip flop circuit 707 is inverted for the first time when the optimal laser power is exceeded by the laser power used to record the read-out signal being processed. In consequence, the output from the counter circuit 705 at this point of time denotes the strength (with a sequence number in the power strength order) of the optimal laser power.

Subtractor circuits 714 and 715, an AND circuit 716, and a flip flop 708 operate in the recording condition check mode to output a signal designating whether or not the current laser power is within the preset allowable range suitable for the data recording operation.

The subtractor circuits 714 and 715 respectively have input lines 717 and 718, which are respectively applied with the upper-limit and lower-limit values of the allowable range.

[Edge interval judge circuit 17]

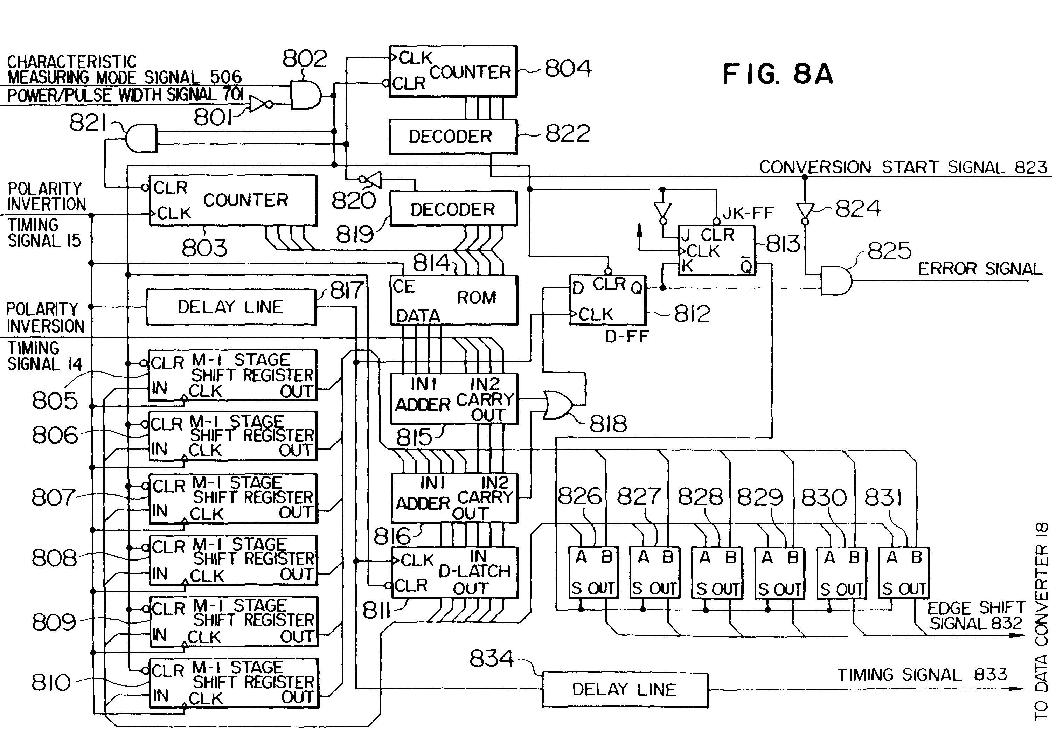

Fig. 8A shows details of the structure of this circuit.

The edge interval judge circuit 17 achieves computations, based on a read-out signal of a predetermined second record pattern including a combination of pulses of various lengths and a gap, to attain a shift quantity of each edge of a read-out signal related to the record signal, thereby producing data to be used to form the edge width adjusting table 19.

In this embodiment, the second record pattern is recorded N times (N is an integer) to obtain thereafter read-out signals thereof. The obtained signals are classified into third patterns each having a shorter length, the third pattern comprising three consecutive pulses and gaps. The shift quantity of the last edge portion of each of the third patterns is processed to attain a mean shift quantity.

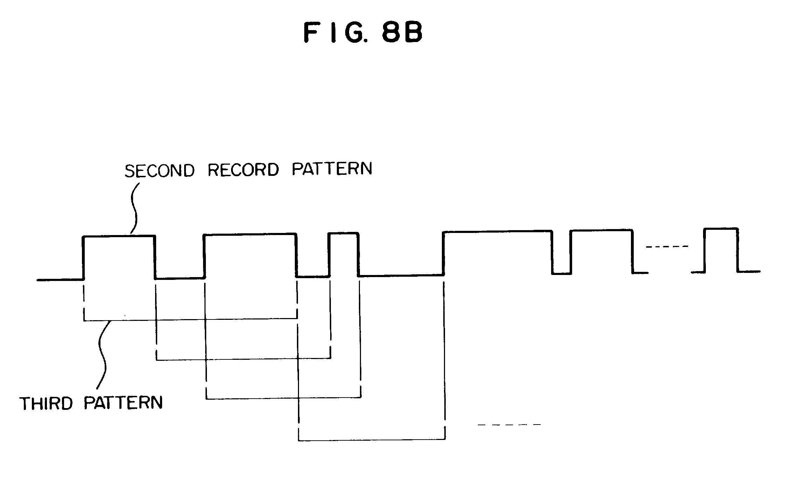

Fig. 8B shows the relations between the second record pattern and the third patterns.

The number of pulses of the inputted polarity inversion timing signal 15 is counted by a group of circuits including a counter circuit 803, a decoder circuit 819, an NOT circuit 820, and an AND circuit 821 to detect the sequential number (relative to the first read-out signal) assigned to the read-out signal of which the edge is being processed. The count value is delivered as an address signal to an ROM circuit 814. At this moment, when the edge shift quantity is zero, there is produced a value obtained by inverting the sign of the value represented by the polarity inversion interval signal 14.

That is, assuming that the length of an i-th pulse and that of a gap of a predetermined record pattern are respectively represented as $\ell_i$ and $b_i$, when an address i is inputted to the ROM circuit 814, the following output signal is generated.

$$-\{(\ell_1 - b_2) + (\ell_3 - b_4) + ... + (\ell_{i-1} - b_i)\}$$

(where, i is an even number)

$$-\{(\ell_1 - b_2) + (\ell_3 - b_4) + ... + \ell_{i-1}\}$$

(where, i is an odd number)

The output signal and the polarity inversion interval signal 14 are supplied to the adder circuit 815, which in turn computes an edge shift quantity for the processing at the point of time.

A latch circuit 811 and shift registers 805 to 810 are used to form a ring-type data buffer together with an adder circuit 816. For each of the third patterns, the edge shift quantities (outputs from the adder circuit 815) are accumulated to be memorized as an intermediate result.

A counter circuit 804 and a decoder circuit 822 are disposed to detect the sequential number (relative to the first period) of the period or cycle of the second record pattern under processing. When the final period is detected, the polarity of a conversion initiation signal 823 is inverted, which indicates that an output signal 832 thereafter represents a mean value of the edge shift quantities for each of the third patterns.

In this regard, the flip-flop circuits 812 and 813, the NOT circuit 824, the OR circuit 818, the AND circuit 825, and the selector circuits 826 to 831 constitute a circuit unit for detecting a data error (caused by, for example, a disk defect) during the processing. In this constitution, when an error is found in the last period of the read-out signal of the second record pattern, the accumulated results of the edge shift quantities attained for the respective third patterns up to the previous period are processed to obtain a mean value of edge shift quantities for an identical edge associated with the detected error.

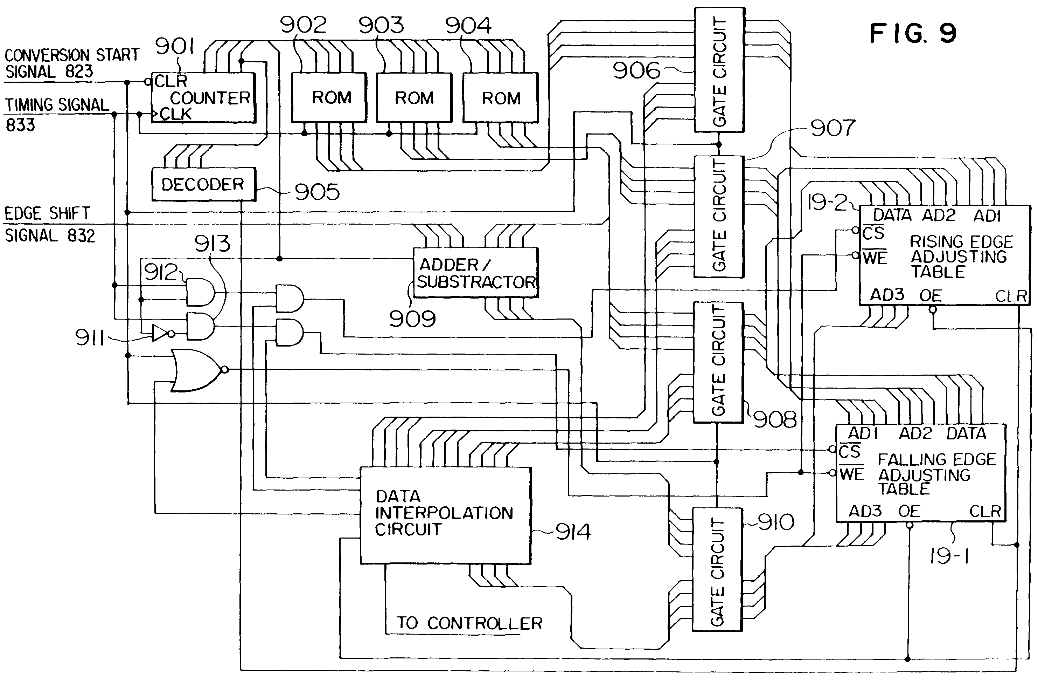

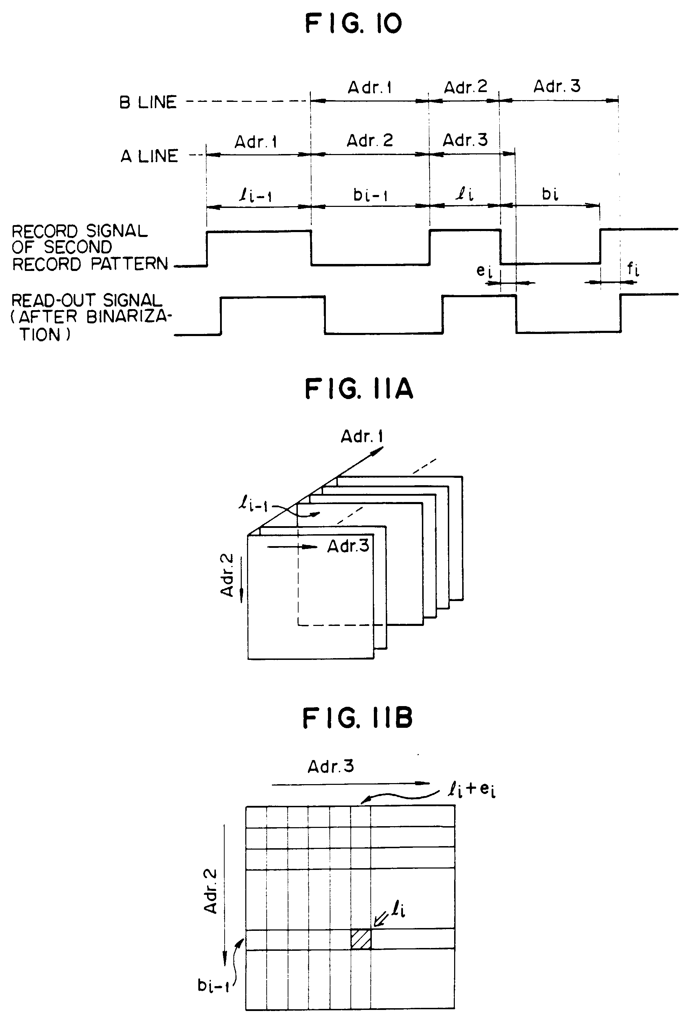

Fig. 9 shows an embodiment of the edge width adjusting table generator circuit 18, whereas Fig. 10 is a graph representing a record signal and a read-out binary signal related to a second record pattern including pulses of various lengths and gaps. The operation of the table generator circuit 18 will now be described by reference to Figs. 9 and 10. Let us assume here that the table is subdivided into three blocks to be indicated by addresses 1, 2, and 3, respectively. In this situation, ROMs 902 and 903 are loaded with digital data values of the pulse and gap lengths respectively associated with the addresses 1 and 2 of the A line shown in Fig. 10. In the configuration of Fig. 9, the addresses 1, 2, and 3 are denoted as AD1, AD2, and AD3, respectively. In the example of Fig. 10, letters $\ell_{i-1}$ and $b_{i-1}$ respectively designate addresses 1 and 2. An area indicated by the address 3 is supplied from an adder/subtractor circuit 909 with the length $\ell_i$ of the third pulse and data $\ell_i + e_i$ attained as the total of edge shift signals 832 related thereto. When $e_i$ is within the range of $\ell_i$, the difference therebetween is computed by the adder/subtractor 909 such that the address 3 is obtained as $\ell_i - e_i$. A ROM 904 is loaded with the third pulse length or gap length, which is a data item to be written in the edge shift adjusting table. Since $e_i$ represents a falling edge shift quantity, the data is stored in a falling edge shift adjusting table 19-1.

Figs. 11A and 11B show relationships between the addresses 1 to 3 and the memory layout of the table with data loaded therein.

When the edge shift signal 832 denotes arising edge shift quantity $f_i$, the addresses 1 to 3 are respectively $b_{i-1}$, $\ell_i$, and $b_i + f_i$ of the B line shown in Fig. 10. Consequently, the data $b_i$ is written in a rising edge shift adjusting table 19-2. In order to appropriately treat the edge shift quantities related to combinations of various memory patterns, the respective addresses have a sufficiently high resolution in this constitution.

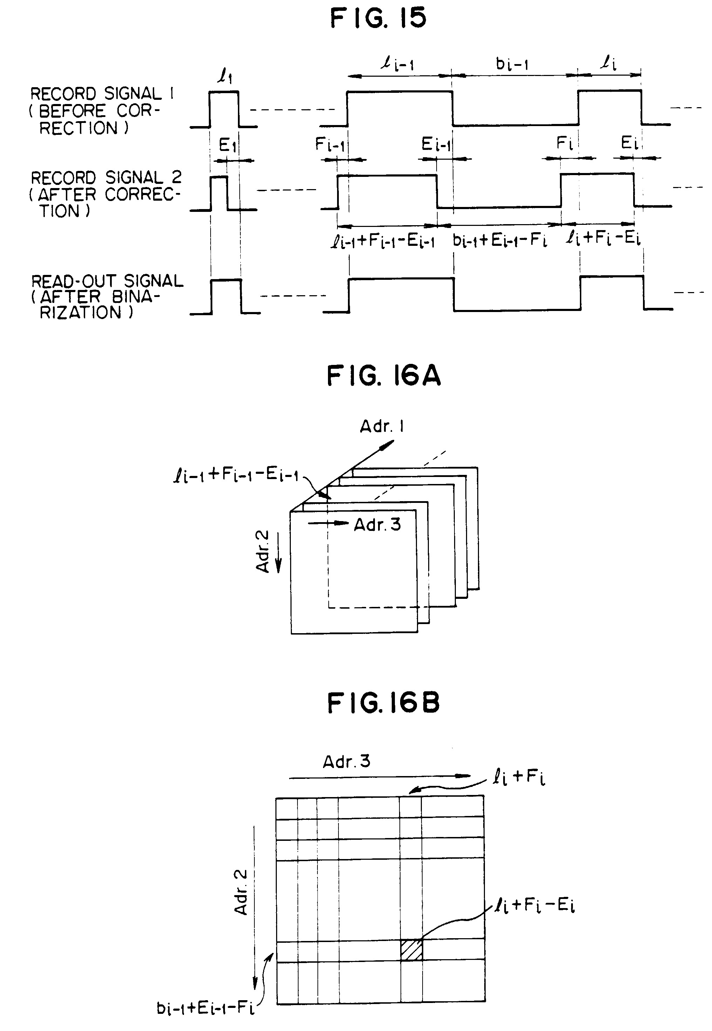

Each data item of these tables 19-1 and 19-2 is set to 0 in the initial stage such that a data item is stored therein for each input of the edge shift signal 832. However, for a pattern which cannot be recognized as a combination of second record patterns, the data item to be written is kept unchanged, namely, 0. With respect to data for the address at which the data has not been written as above, they are obtained through an interpolation based on data already written in the table. As a result, also at the addresses 1 to 3 of Fig. 16B, which will be described later, data items can be written in the associated areas.

Gate circuits 906 to 908 and 910 are employed in a data write operation to achieve a write data change-over operation between a measured value and an interpolated value.

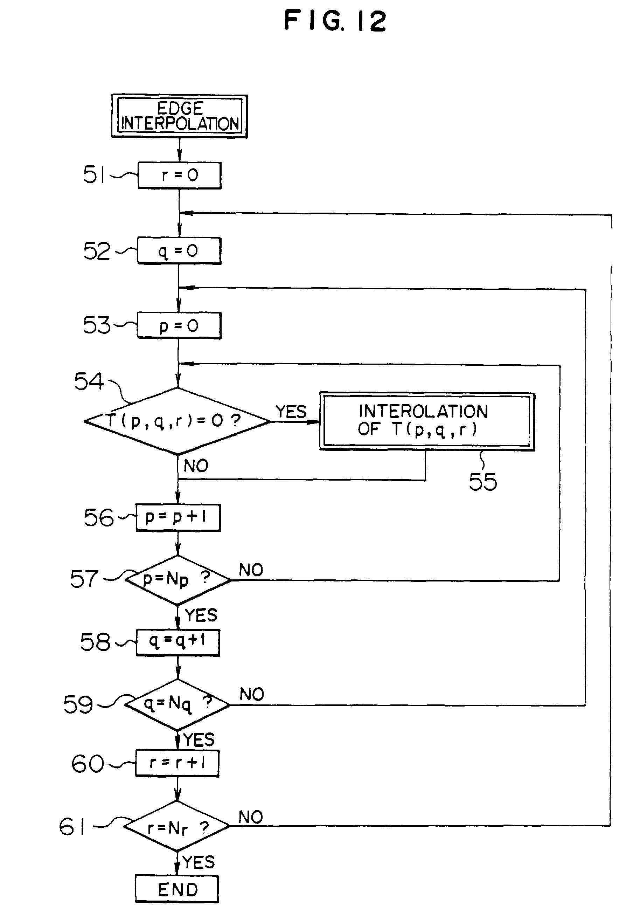

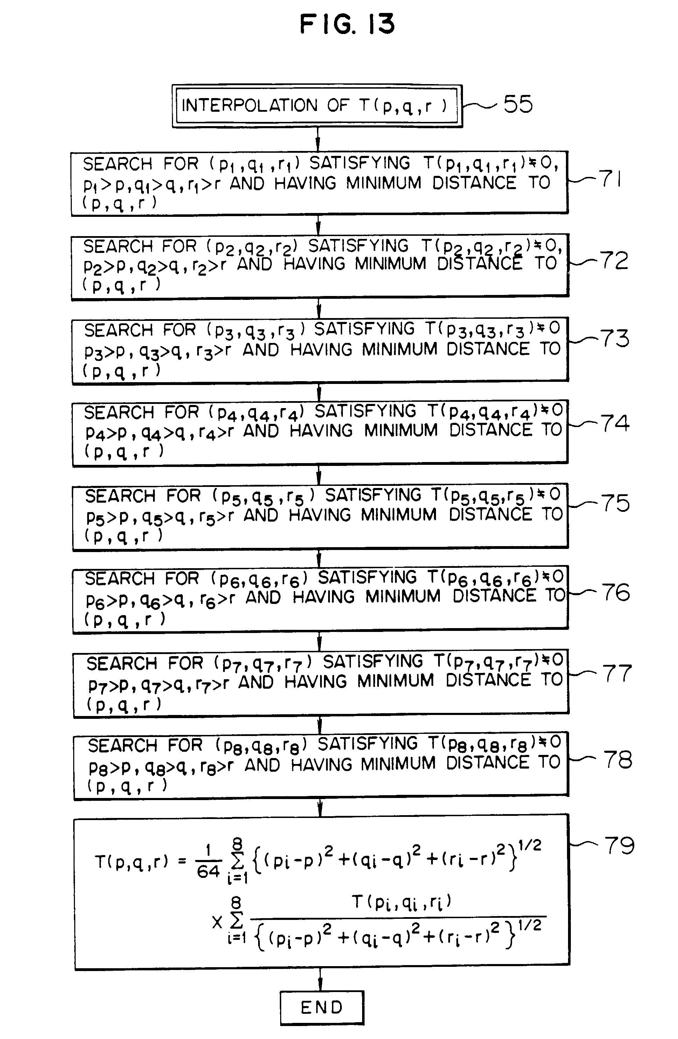

Figs. 12 and 13 show flowcharts of the data interpolation. Namely, the system sequentially conducts a data scanning operation along the respective address directions. For data having a value 0, a data search is conducted in the three-dimensional memory space along the eight directions thereof to obtain measured data at a position next to a position 0 for each direction. Subsequently, each measured data is assigned with a weight depending on a distance thereof from the position of the data having a value 0 so as to compute a mean value thereof. The obtained value is used as an interpolation value at the position of the data having the value 0.

Specifically, let us assume that the dimensions of the edge adjusting table T (AD1, AD2, AD3) are expressed as Np, Nq, and Nr in the respective directions AD1, AD2, and AD3; the pulse/gap lengths $(\ell_{i-1}, b_{i-1}, \ell_i)$ respectively have resolutions $\Delta\alpha$, $\Delta\beta$, and $\Delta\gamma$; and the pulse/gap lengths $(\ell_{i-1}, b_{i-1}, \ell_i)$ respectively take the minimum values $\alpha_0$, $\beta_0$, and $\gamma_0$. Under this condition, a combination of patterns $(\ell_{i-1}, b_{i-1}, \ell_i)$ registered to the edge adjusting table is expressed as follows.

$$(\ell_{i-1}, b_{i-1}, \ell_i) = (\alpha_0 + p\Delta\alpha_0, \beta_0 + q\Delta\beta_0, \gamma_0 + r\Delta\gamma_0)$$

$$(0 \leqq p \leqq Np, 0 \leqq q \leqq Nq, 0 \leqq r \leqq Nr)$$

In consequence, when the table scanning operation is achieved, a set of data items (p, q, r) is inputted as an address value. In the flowchart of Fig. 12, steps 51, 52, and 53 initialize the respective addresses. A step 54 checks to determine whether or not data at an objective address position has a value 0. If this is the case, to obtain data for the area based on an interpolation, control is passed to a step 55. Otherwise, since the pertinent data has already been obtained as measured data, a data check is conducted in the next address position. Steps 56 and 57, 58 and 59, and 60 and 61 respectively check data in the directions of the addresses 1, 2, and 3.

Fig. 13 is a flowchart showing the operation of the interpolation.

A step 71 achieves a data search in the first direction of the eight directions to obtain measured data at a position next to the position (p, q, r) of data having a value 0.

A step 72 similarly conducts a data search in the second direction to attain measured data at a position next to the position (p, q, r) of data having a value 0.

In steps 73 to 78, the data search operations are conducted in the similar manner to attain measured data at the nearest positions in the respective directions as above.

A step 78 assigns the attained data with weights reversely proportional to the respective distances relative to the position (p, q, r). Eight resultant measured data items are then processed to obtain a mean value, which is employed as interpolation data.

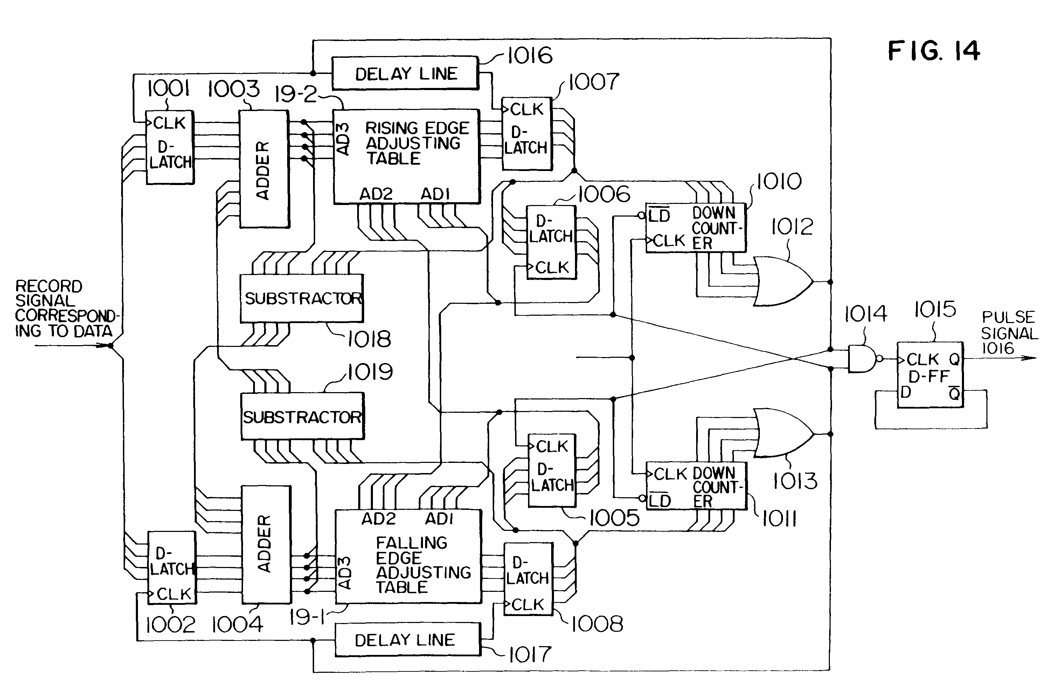

Fig. 14 shows an embodiment of the edge width adjusting circuit 21, whereas Fig. 15 shows an example of the correction in an actual data recording operation.

Figs. 16A and 16B are diagrams useful to explain an operation example in which correction data is read from the table.

Referring now to Figs. 15, 16A, and 16B, the operation of the edge with adjusting circuit 21 will be described.

In the constitution of Fig. 14, a latch circuit 1005 is used to set addresses 1 and 2 in association with the falling edge adjusting table 19-1 and the rising edge adjusting table 19-2, respectively. A latch circuit 1006 establishes addresses 2 and 1 for the edge adjusting tables 19-1 and 19-2, respectively. Each of adders 1003 and 1004 produces an output, which is used to set an address 3. Based on the value set as the address 3, a subtractor 1018 outputs a value equivalent to a rising edge shift quantity; whereas a subtractor 1018 similarly produces a value associated with a falling edge shift quantity. A latch circuit 1001 is disposed to store therein a value related to a gap length of a record pulse 1 shown in Fig. 15. A latch 1002 is employed to be loaded with a value equivalent to a pulse length of the record pulse 1. Down counters 1010 and 1011 and gate circuits 1012 and 1013 are used to convert a digital value into a pulse and a gap each having an associated length. The pulse and the gap undergoes the correction are ouputted in the form of a pulse signal 1016.

When the first pulse $\ell_i$ of the record pulse 1 before correction is inputted, the system conducts processing as follows. Namely, since this is equivalent to a case where a pulse is recorded for the first time after a long interval of time, the pulse $\ell_1$ may be considered to have received after a pulse of a small length followed by a gap having a great length. In this situation, the falling edge of the pulse is corrected by referencing the falling edge adjusting table 19-1. First, the latches 1005 and 1006 are loaded with the minimum number of the address 1 and the maximum number of the address 2, respectively. Moreover, the output from the subtractor 1018 is set to 0. With this initialization, the latch 1002 and the adder 1004 each produce an identical output i.e. $\ell_1$. When a read operation is achieved on the table 19-1 in this state, since the value associated with Fi of the address 3 of Fig. 16B is before hand set to 0 by the subtractor 1018, a pulse length $\ell_1 - E_1$ is obtained as the corrected pulse length.

When the first gap is inputted after the first pulse of the record pulse 1, the rising edge adjusting table 19-2 is referenced to correct the rising edge of the gap. In this case, the latch 1006 to be loaded with the address 1 of the table 19-2 is set to the maximum number of the address 1, the latch 1005 to be loaded with the address 2 is set to $\ell_1 - E_1$, and then the falling edge?correction quantity $E_1$ of the previous pulse, which is a portion of a value to be used as the address 3, is set to the subtractor 1019. When a read operation is conducted on the table 19-2 under this condition, $b_1 + E_1 - F_1$ is attained as the corrected gap length.

When the second pulse of the record pulse 1 is inputted, the falling edge adjusting table 19-1 is again referred to accomplish the correction. Namely, the addresses 1, 2 and 3 are respectively set to the corrected pulse length $\ell_1 - E_1$, the corrected gap length $b_1 + E_1 - F_1$, and $\ell_2 + F_2$. Resultantly, the corrected pulse length is obtained as $\ell_2 + F_2 - E_2$.

Fig. 15 shows an example of the correction in a generalized form. Assuming for three patterns as collation units that the rising and falling edge correction quantities of the pulse and the gap are $F_{i-1}$, $E_{i-1}$, and $F_i$, respectively. To obtain the corrected length of the third pulse of the collation pattern, the addresses 1 and 2 are respectively set to the corrected pulse and gap lengths and the address 3 is set to the third record pulse length $\ell_i + F_i$ attained by use of the preceding edge correction quantity as above. As a result, the corrected third pulse length is obtained as $\ell_i + F_i - E_i$.

The corrected gap length can also be attained in the similar manner.

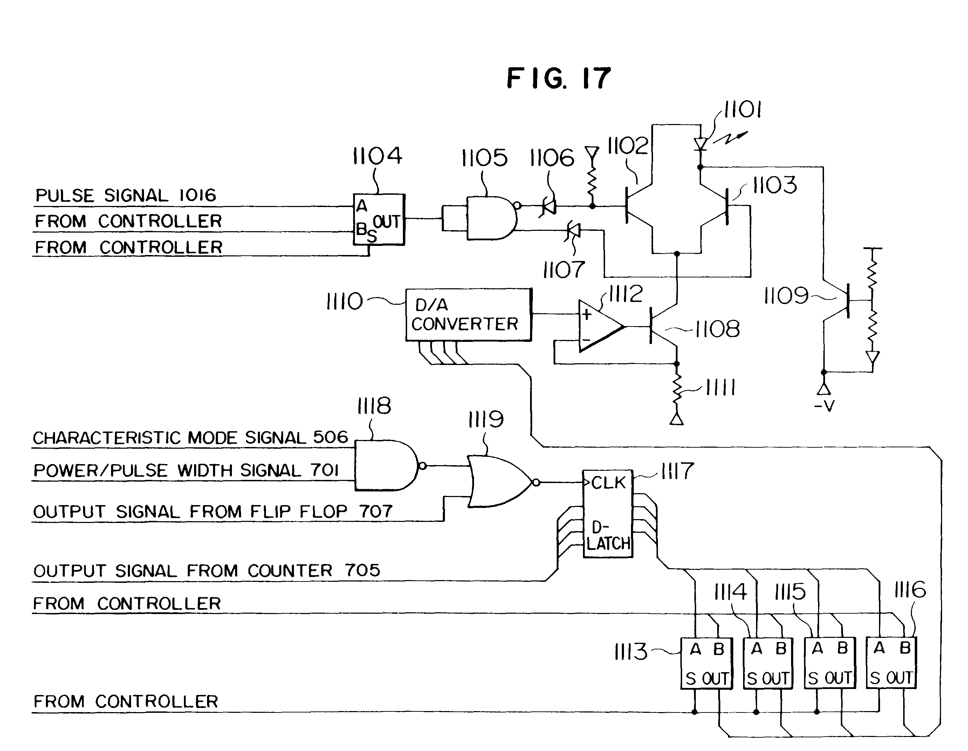

Fig. 17 shows an embodiment of the laser driver circuit 12.

This embodiment is implemented by additionally disposing a recording power change function to the conventional laser driver circuit. Each A input terminal of selector circuits 1113 to 1116 is supplied with a laser power preset value for an ordinary recording operation, whereas each B input terminal thereof is supplied with a laser power preset value to be used when the characteristic measuring test pattern of Fig. 7 is recorded in the recording power check mode.

For the laser power of an ordinary recording operation, a numeric value designating a level determined to be an optimal laser power in the recording power check mode is kept retained in a latch circuit 1117. In operation, the signal is continuously applied to the selectors 1113 to 1116.

An S terminal of each of the selectors 1113 to 1116 is supplied with a select signal from the controller such that the output therefrom is changed over as follows. Namely, in the recording power check mode, an Out terminal thereof outputs a signal received from the B terminal, whereas in the other modes, the Out terminal delivers a signal from the A terminal.

Each selector output is fed to a D/A converter 1110. Based on a level of an output signal produced by the D/A converter 1110, the laser power is decided for the recording operation.

In the description of the embodiment according to the present invention, the collation patterns have three edge widths; however, naturally, the correction can be similarly accomplished when collation patterns having other than three edges are employed.

According to the present invention, in the initial setup operation, while changing the laser power and the recording medium surface temperature, a plurality of particular patterns are recorded on the surface and are then read out therefrom to measure edge shift quantities respectively of the particular patterns based on the read-out signals. Depending on results of the measurements, the edge shift quantity A related to the laser power variation and the edge shift quantity B associated with the variation in the recording medium surface temperature are obtained.

Before data is actually written on the surface, the particular patterns are again recorded thereon and are read out therefrom to accomplish again a check for occurrence of an edge shift. If the edge shift is detected, the laser power variation quantity and the quantity of variation in the recording medium surface temperature are separately acquired depending on the edge shift quantities A and B obtained in advance.

If the variation quantity in the recording medium surface temperature is less than a predetermined value, the laser power is readjusted. If the quantity is more than the predetermined value, values in the edge width adjusting table are updated to correct the pit edge width of the actual data accordingly.

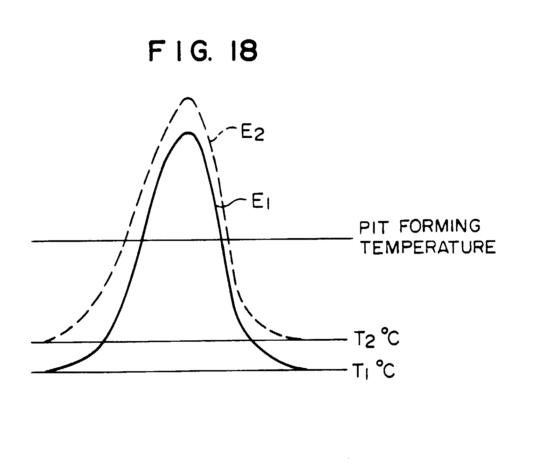

Of the factors concerning the recording operation, the recording medium surface temperature and the laser power used for the recording operation may possibly be varied in a relatively short period of time. Since the recording principle of the optical disk is associated with heat, the variations in the factors above exert a considerably great influence on the recording condition. For example, as shown in Fig. 18, when the temperature on the recording medium surface is increased from $T_1$°C to $T_2$°C, the energy distribution of the laser beam alters from $E_1$ to $E_2$.

Since the pit forming temperature is fixed, when the temperature on the recording medium surface is increased, the pit size becomes to be larger. Conversely, when the temperature is lowered, the pit size is reduced.

Moreover, when the laser power increases in a recording operation, the size of the record mark thus created becomes to be larger. The increase in the size is associated with the increase in the energy supplied to the recording medium surface. However, the state of mark contour variation in the recording operation varies between the change in the temperature and the laser power variation. Consequently, for example, when the recording medium surface temperature alters to exceed a predetermined level, the variation cannot be completely canceled or compensated for by adjusting the laser power and hence an edge shift component may disadvantageously be kept remained depending on record patterns in some cases.

In consequence, when a recording state is judged to have undergone a change, the factor associated with the laser power alteration and that related to the temperature variation on the recording medium surface are required to be separately detected. For this purpose, the record marks are written on the surface while altering the temperature on the surface and then the edge position variations appearing in the read-out signals of the record marks are measured for the respective conditions; moreover, the record marks are written on the surface while altering the recording laser power and then the edge position variations appearing in the read-out signals of the record marks are measured for the associated conditions.

The characteristics of these variations are independently sensed and measured so that the results obtained from the respective measurements are appropriately combined with each other for use in subsequent operations. That is, the factor of the edge position variation related to the temperature change on the recording medium surface depends only on the thermal characteristic of the recording medium, and the spot distribution (including, for example, a wavefront aberration) of the laser beam used in the recording operation does not give influence on the factor unless the beam spot is extremely expanded, for example. Consequently, it is only necessary to check the factor in advance as a characteristic unique to each recording medium so as to record the check result in a dedicated area. In addition, the temperature on the actual recording medium surface cannot be easily measured and it is attended with a difficulty to install the characteristic measuring function in an ordinary optical disk unit. Consequently, the edge shift quantities of the particular patterns are preferably measured and are recorded on the recording medium in the manufacturing process thereof. On the other hand, the factor associated with the laser power variation is influenced by the spot distribution of the laser beam used in the recording operation and hence may vary depending on the optical disk unit and is required to be measured on the optical disk installed in the disk unit actually employed.

The edge variation characteristic related to the laser power variation is measured from the optical disk mounted on the disk unit utilized in the actual operation; whereas, the edge variation characteristic associated with the variation in the recording medium surface temperature beforehand written on the medium is read therefrom. These characteristic data items are adopted as fundamental data items when the laser power variation component and the variation component of the recording medium surface temperature are separately detected.

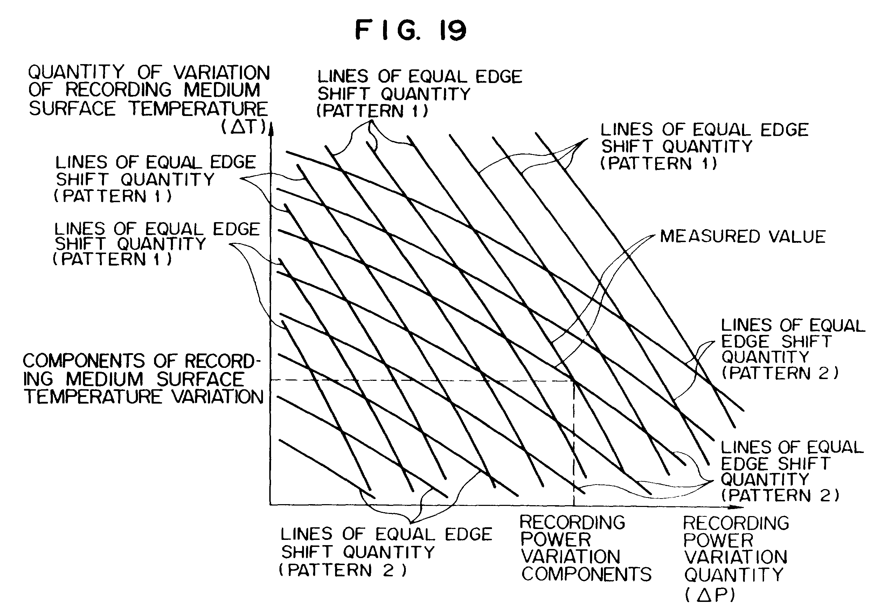

Fig. 19 schematically shows relationships between the laser power variation component, the variation component of the recording medium surface temperature, and the edge shift variation quantity. In this graph, the abscissa and the ordinate respectively stand for the laser power variation component and the variation component of the recording medium surface temperature. The graph includes a group of curves with the read-out signal edge shift quantity set as a parameter, namely, curves of equal edge shift quantity are presented. In the group of curves, the interval along the abscissa and the contour of the curves are decided by the characteristics on the disk unit side such as the laser light intensity and the spot distribution; whereas, the interval thereof along the ordinate is determined by the recording medium characteristics.

Consequently, if the laser power is kept unchanged, the edge shift characteristic related to the laser power variation need not be measured for each recording operation.

In the graph of Fig. 19, the contour of each of the edge shift curves slightly varies depending on the record patterns to be measured. Consequently, in principle, with the measured results obtained from two or more record patterns, the laser power variation quantity and the variation quantity of the recording medium surface temperature can be separately detected.

In other words, based on the edge shift quantity measured for each of the record patterns, there is determined a curve of equal edge shift quantity. Using intersections therebetween, the laser power variation quantity and the variation quantity of the recording medium surface temperature can be obtained.

Actually, in consideration of errors contained in the measurement results, at least three different patterns are favorably utilized to measure the edge shift quantities so that depending on the results of the measurements, the laser power variation quantity and the variation quantity of the recording medium surface temperature are attained, for example, by using a method of least squares.

According to the present invention, as the record patterns 1 and 2 of Fig. 19, there are selected two different patterns including three edge widths contained in patterns which are inevitably included when ordinary data is recorded in a sector of an optical disk, for example, a pattern used to generate a clock and a particular pattern adopted to check a shift of the clock at an intermediate point, thereby measuring the shift quantity for the last edge of each of the patterns. These patterns 1 and 2 are identical to the pattern 3 above.

According to the present invention, data representing the characteristic curves of Fig. 19 is acquired in the initial setup phase when power is turned on, namely, there are obtained edge shift quantities of the patterns 1 and 2 with respect to the unitary variation of the laser power and edge shift quantities of the patterns 1 and 2 with respect to the unitary variation of the recording medium surface temperature. Next, before recording actual data on the optical disk, the edge shift quantities of the patterns 1 and 2 are again measured so that the laser power variation quantity and the variation quantity of the recording medium surface temperature are attained depending on results of the measurements and the characteristic curves of Fig. 19.

Specifically, these variation quantities are obtained by solving the following simultaneous equations (1) and (2)

$$x1 \cdot \Delta P + y1 \cdot \Delta T = M1 \tag{1}$$

$$x2 \cdot \Delta P + y2 \cdot \Delta T = M2 \tag{2}$$

where:

x1 is a variation quantity of the last edge of the pattern 1 with respect to the unitary variation quantity of the recording medium surface temperature;
x2 is a variation quantity of the last edge of the pattern 2 with respect to the unitary variation quantity of the recording medium surface temperature;
y1 indicates a variation quantity of the last edge of the pattern 1 with respect to the unitary variation quantity of the laser power;
y2 indicates a variation quantity of the last edge of the pattern 2 with respect to the unitary variation quantity of the laser power;
M1 stands for a variation quantity of the last edge of the pattern 1;
M2 stands for a variation quantity of the last edge of the pattern 2;
$\Delta P$ designates an objective variation quantity of the recording medium surface temperature; and
$\Delta t$ designates an objective variation quantity of the laser power.

The processing above is executed by means the CPU and the memory in the controller 22. Based on the magnitude of each of the variation quantities, the laser power is readjusted and/or the data in the table is updated to accomplish a correction for an edge interval optimal for the data to be recorded on the disk.

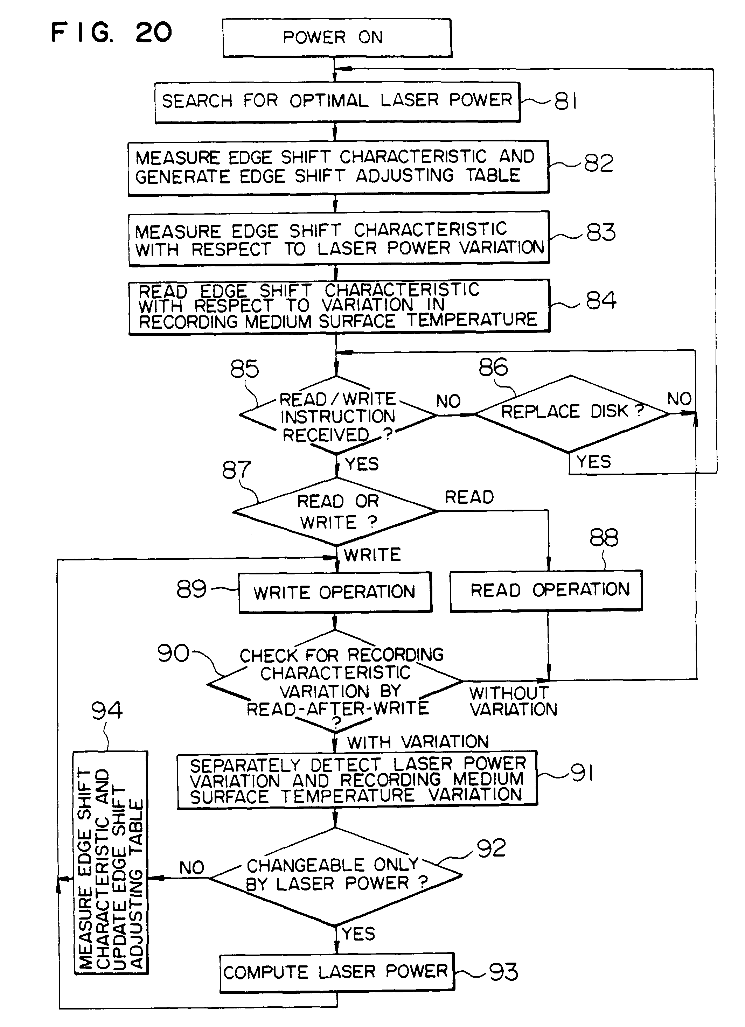

Subsequently, referring to the flowchart of Fig. 20, the overall operation will be described. First, when the optical disk unit is powered, the initial setup operation is achieved in the unit as follows.

The laser driver circuit 12 is first driven according to the first record pattern shown in Fig. 7 to record data on the optical disk 1. The data is then read out from the recorded position to obtain a read-out waveform, which is processed by the edge timing detector circuit 13 and the edge interval judge circuit 17 to search for an optical laser power. The value of the optical record power thus computed is set to the laser driver circuit 12 (step 81).

Next, the laser driver circuit 12 is driven according to the second record pattern to record the second pattern data on the optical disk 1. The data is then read out from the recorded position to attain a read-out waveform, which is processed by the edge timing detector circuit 13, the edge interval judge circuit 17, and the edge width adjusting table generator circuit 18 to detect a shift quantity of the edge position for each of the third patterns contained in the read-out signal of the second pattern. Based on the obtained results, the edge width adjustment quantity table 19 is produced through the interpolation processing of Figs. 12 and 13 (step 82).

Subsequently, the patterns inevitably appearing when ordinary data is recorded in a sector of the optical disk, for example, a pattern used to create a clock and a particular pattern used to check a shift of the clock at an intermediate point are recorded on the disk by setting a value of the laser power slightly shifted from the value for the optimal laser power to the laser driver circuit 12. Thereafter, the patterns are read out therefrom to acquire edge variation characteristic data of the patterns 1 and 2 with respect to the laser power variation. Next, the CPU in the controller 22 computes the edge shift quantities of the patterns 1 and 2 for the unitary variation quantity of the laser power. After the measurements are completely achieved, an optimal laser power is again set to the laser driver 12 (step 83).

Subsequently, the edge variation characteristic data which is associated with the recording medium surface temperature variation and which is recorded in a dedicated area of, for example, the inner-most track of the optical disk 1 is read therefrom and then the CPU of the controller 22 computes the edge shift quantities of the patterns 1 and 2 with respect to the unitary variation quantity of the recording medium surface temperature (step 84).

The sequence of the steps 83 and 84 may be reversed.

The initial setup operation of the apparatus according to the present invention has been described. When the operation is finished, the system waits for an instruction from a device connected to the apparatus, for example, to the computer (step 85). On receiving a signal, a data read or write operation is accomplished depending on the received signal (step 86). The optical disk may possibly be replaced during the instruction reception wait time. Consequently, during this period of time, the system monitors an optical disk replacement such that when another disk is installed, the system conducts a processing similar to that achieved when the apparatus is powered (step 86).

When a write instruction is received, after the write operation (step 89) is finished, in order to decide whether or not the data is appropriately written on the disk, a read-after-write operation is accomplished to actually detect and to check the data. In this operation, based on the read-out signal of the stored data including the patterns 1 and 2 or the dedicated record pattern which includes the patterns 1 and 2 and which is prepared in a first field of the written data, edge shift quantities are detected by the edge timing detector circuit 13 and the edge interval judge circuit 17, thereby deciding whether or not an edge shift occurs depending on the detection result (step 90). The judgement is conducted on the basis of whether or not the detected edge shift quantity is within an allowable range associated therewith. When it is determined that the record state is kept unchanged, control is returned to the step 85, namely, the system enters the instruction reception wait mode.

When the edge shift quantity is judged to be beyond the allowable range, actual values are assigned to the simultaneous equations (1) and (2) to separately detect the laser power variation quantity $\Delta P$ and the variation quantity $\Delta T$ of the recording medium surface temperature (step 91). A check is then made to determine whether or not the variation quantity $\Delta T$ of the recording medium surface temperature is greater than a predetermined value (step 92). If the variation quantity $\Delta T$ of the recording medium surface temperature is small, it is only required to readjust the laser power to cope with the condition. Then, an optimal laser power can be computed depending on the detected edge shift quantities and the edge shift characteristic associated with the laser power. The computed value is again set to the laser driver circuit 12 to rewrite the present data (step 93).

The readjustment of the laser power is equivalent to an operation in which the shift from the optimal laser power is corrected to replace the existing value with a value for the corrected optimal laser power.

If the variation quantity $\Delta T$ of the recording medium surface temperature is great, even when only the laser power is altered, the edge shift cannot be canceled or compensated for. In this case, the second pattern is recorded on the disk and is then read therefrom to measure again the edge shift characteristic so as to update the data in the edge width adjusting table (step 94). Thereafter, while correcting the edge interval according to the correction method of Figs. 15, 16A and 16B, the current data is rewritten again.

Description has been given of an embodiment according to the present invention.

With the provision of the pit edge interval correction method according to the present invention, it is possible to remove the variation of the edge position in the read-out waveform due to a thermal interference caused for an identical record pulse because of a difference between the current and previous record patterns.

In the embodiment above, the recording line speed is fixed. However, since the rotation speed is fixed in many optical disks, the recording line speed and hence the recording characteristic vary depending on the recording radii. In a case of an optical disk, taking the random accessibility thereof into consideration, it is necessary in the recording characteristic measurement that characteristic measuring test patterns are recorded thereon at a plurality of positions respectively having different recording line speeds on the disk surface to detect the edge shift characteristic. For this purpose, a plurality of edge width adjusting tables 19 are prepared in the system.

The measurements are conducted on a plurality of disk surface areas such as areas on an inner circumferential side, on an outer circumferential side, and in an intermediate portion thereof. These areas may be particularly allocated on the disk or ordinary data recording areas may be used for this purpose. In the latter case, if such an area allocated for the measurement already contains record data, the system uses another free area or the system temporarily moves information from the area to another area such as a memory in the controller before using the allocated area.

The patterns 1 and 2 of Fig. 19 are not limited to those having the three edge intervals, namely, the length thereof may be arbitrarily established.

While particular embodiments of the invention have been shown and described, it will be obvious to those skilled in the art that various changes and modifications may be made without departing from the present invention in its broader aspects.

**Claims**

1.  Method of correcting a pit edge interval in an optical recording/read-out apparatus comprising the steps of:

    setting a first laser power, recording a predetermined pattern B including a plurality of different patterns An, n = 1, 2,..., N, each having a predetermined number of rising edges and a predetermined number of falling edges, and reading out said pattern B (steps 81, 82);

    memorizing, based on a read-out signal of said pattern B, relationships between said patterns An and edge shift quantities thereof in a form of a table (step 82);

    setting said laser power to a plurality of different values, recording a plurality of mutually different patterns Cn, n = 1, 2, ..., M, by each said laser power thus set, and reading out said patterns Cn (step 83);

    obtaining, based on a read-out signal of each said pattern Cn, an edge shift quantity with respect to a unitary variation quantity of said laser power (step 83);

    setting said laser power to said first laser power (step 83);

    attaining, for each said pattern Cn, an edge shift quantity with respect to a unitary variation quantity of a disk recording medium surface temperature of an optical disk (step 84) ;

    recording in a predetermined area of the optical disk, relationships between edge shift quantities of said patterns and variation quantities of said recording medium surface temperature (step 84) ;

    recording said patterns Cn before recording actual data, reading out said patterns Cn, and checking to determine whether or not an edge shift beyond an allowable range occurs (step 90);

    separately attaining, in dependence on a quantity of said edge shift occured, when said check results in an occurence of an edge shift beyond an allowable range, a corresponding variation quantity of said laser power and a corresponding variation of said recording medium surface temperature both common to said patterns Cn, on the basis of the measurements of the edge shift quantity with respect to the unitary variation of said laser power and the unitary variation of said quantity of said disk recording medium surface temperature (step 91);

    updating, based on each said variation quantity, the setting value of said laser power (93) and data of said table (step 94); and

    referencing, when recording actual data, said table and for correcting the edge interval of the actual data (step 91).

2.  Method according to claim 1,
    characterized in that
    said step of recording and reading out said pattern B includes, in setting said first laser power, the steps of:

    recording a predetermined pattern D by a plurality of different laser power and reading out said pattern D ; and
    setting as said first laser power a laser power used for the recording, said laser power being associated with a read-out signal of said pattern D having an edge shift quantity within an allowable range (step 81).

3.  Method according to claim 1,
    characterized in that
    said step of memorizing a table of relationships between said patterns An and edge shift quantities further includes the steps of:

    registering to said table a pattern E which is not classified as said pattern An and which has said predetermined number of rising edges and said predetermined number of falling edges ; and
    attaining an edge shift quantity related to said pattern E through an interpolation based on the edge shift quantities of said patterns An.

4.  Method according to claim 1,
    characterized in that
    said step of obtaining an edge shift quantity with respect to a unitary variation quantity of said recording medium surface temperature includes the steps of:

    setting said recording medium surface temperature to a plurality of different values, recording said patterns Cn by a predetermined laser power, and reading out said patterns Cn; and
    obtaining the edge shift quantity with respect to a unitary variation quantity of said recording medium surface temperature based on an edge shift quantity of each said pattern Cn in the read-out signal and the variation quantity of said recording medium surface temperature (step 84).

5. Method according to claim 4,
characterized in that
said step of obtaining an edge shift quantity with respect to a unitary variation quantity of said recording medium surface temperature includes the steps of:

obtaining the edge shift quantity by reading data from an optical disk, the data being beforehand loaded therein and representing relationships, for said patterns Cn, between the unitary variation quantity of said recording medium surface temperature and edge shift quantity (step 84).

6. Method of correcting a pit edge interval in an optical recording/read-out apparatus comprising the steps of:

recording a plurality of mutually different patterns Cn (n = 1, 2, ..., M) with a predetermined laser power while changing the recording medium surface temperature of an optical disk (step 83) ;

recording, in a predetermined area of the optical disk, relationships between edge shift quantities of said patterns and variation quantities of said recording medium surface temperature (step 84) ;

reading said relationships from said optical disk and storing said relationships in a memory (step 84);

recording said patterns Cn with a plurality of laser power, reading out said patterns Cn, and attaining, based on a read-out signal, relationships between the edge shift quantities of said patterns Cn and variation quantities of said laser power (83);

recording, before writing actual data, said patterns Cn again, reading out said patterns Cn, and checking a read-out signal to determine whether or not an edge shift occurs therein (90);

obtaining, in dependence on a quantity of said edge shift occured, when said check results in an occurrence of an edge shift beyond an allowable range, a corresponding variation quantity of said laser power and a corresponding variation of said recording medium surface temperature both common to said patterns Cn, relationships between the variation quantities of said recording medium surface temperature and the edge shift quantities of said patterns Cn and relationships between the variariation quantities of said laser power and the edge shift quantities of said patterns Cn (step 91); and

setting, based on each said variation quantity, said laser power and a correction quantity of the pit edge interval to optimal values, respectively (steps 93, 94).

7. Method according to claim 6,
characterized in that
said step of setting said correction value to an optimal value includes the steps of:

forming a table representing relationships between a plurality of mutually different patterns An, n = 1, 2, ..., N, each having a predetermined number of rising edges and a predetermined number of falling edges and shift quantities of last edges of said patterns An in a read-out signal (step 82);

collating, when recording actual data, a pattern of said actual data and the patterns registered to said table; and

correcting, when said collation results in a matching, the edge position of the collated pattern of said data based on the shift quantity registered to said table, thereby canceling a thermal interference from a pattern beforehand recorded.

8. Method according to claim 6,
characterized in that
said step of forming a table further includes the steps of:

registering to said table a pattern E which is different from said patterns An and which has the predetermined number of rising edges and the predetermined number of falling edges; and

obtaining a shift quantity of a last edge of said pattern E through an interpolation based on the shift quantities of the last edges of said patterns An.

9. Optical disk manufacturing method comprising the steps of:

recording a plurality of mutually different patterns Cn, n = 1, 2, ..., M, with a predetermined laser power while changing the recording medium surface temperature of an optical disk (83);

recording, in a predetermined area of the optical disk, relationships between edge shift quantities of said patterns and variation quantities of said recording medium surface temperature (step 84).

**10.** Apparatus for correcting a pit edge interval in an optical recording/read-out apparatus comprising:

recording control means (16, 12) for recording a signal on an optical disk with a laser power set for the recording;

first control means (82) for recording a predetermined pattern B including a plurality of different patterns An, n = 1, 2, ..., N, each having a predetermined number of rising edges and a predetermined number of falling edges and reading out said pattern B;

storing means (82, 13, 17, 18, 19) for memorizing therein, based on a read-out signal of said pattern B, relationships between said patterns An and edge shift quantities thereof in a form of a table;

second control means (83, 16, 12) for recording a plurality of mutually different patterns Cn, n = 1, 2, ..., M, with laser power set to a plurality of different values and reading out said patterns Cn;

means (83, 22) for obtaining, based on a read-out signal of each said pattern Cn, an edge shift quantity with respect to a unitary variation quantity of said laser power;

means (84, 22) for attaining, for each said pattern Cn, an edge shift quantity with respect to a unitary variation quantity of the disk recording medium surface temperature of an optical disk;

means for recording, in a predetermined area of the optical disk, relationships between edge shift quantities of said patterns and variation quantities of said recording medium surface temperature

means (90, 22) for recording said patterns Cn before recording actual data, reading out said patterns Cn and checking to determine whether or not an edge shift beyond an allowable range occurs;

means (91, 22) for separately attaining, in dependence on a quantity of said edge shift occured, when said check results in an occurence of an edge shift beyond an allowable range, a corresponding variation quantity of said laser power and a corresponding variation of said recording medium surface temperature both common to said patterns Cn, on the basis of the measurements of the edge shift quantity with respect to the unitary variation of said laser power and the unitary variation of said quantity of said disk recording medium surface temperature;

third means (22) for updating, based on each said variation quantity, the setting value of said laser power (12, 16, 93) and data of said table; and

means (89, 19) for referencing, when recording actual data, said table and for correcting the edge interval of the actual data.

**11.** Apparatus according to claim 10,
characterized in that
said means for recording and reading out said pattern B includes, as means for determining a laser power for the recording:

fourth control means (81, 12, 16) for recording a predetermined pattern D by a plurality of different laser power and reading out said pattern D; and

means (12, 16, 22) for setting, as the laser power for recording the pattern B, a laser power which is used for the recording and which is associated with a read-out signal of said pattern D having an edge shift quantity within an allowable range.

**12.** Apparatus according to claim 10,
characterized in that
said means for memorizing a table of relationships between said patterns and edge shift quantities further includes:

means (18, 19, 22) for registering to said table a pattern E which is not classified as said pattern An and which has said predetermined number of rising edges and said predetermined number of falling edges; and

means (18, 19, 22) for attaining an edge shift quantity related to said pattern E through an interpolation based on the edge shift quantities of said patterns An.

**13.** Apparatus according to claim 10,
characterized in that
said means for obtaining an edge shift quantity with respect to a unitary variation quantity of said recording medium surface temperature includes:

fifth means (83) for setting said recording medium surface temperature to a plurality of different values, recording said patterns Cn by a predetermined laser power, and reading out said patterns Cn; and

means (84) for obtaining the edge shift quantity with respect to a unitary variation quantity of said recording medium surface temperature based on an edge shift quantity of each said patterns Cn in the read-out signal and the variation quantity of said recording medium surface temperature.

14. Apparatus according to claim 13,
characterized in that
the edge shift quantity with respect to the unitary variation quantity of said recording medium surface temperature is obtained by reading data from an optical disk, the data being beforehand loaded therein and representing relationships, for said patterns Cn, between the unitary variation quantity of said recording medium surface temperature and edge shift quantity.

15. Optical disk for use in anyone of the apparatus/methods according to any of the preceding claims on which relationships are recorded in a predetermined area thereof associated with said relationships, said relationships being obtained, through a recording operation of a plurality of mutually different patterns Cn, n = 1, 2, ..., M, with a predetermined laser power while changing the recording medium surface temperature of the optical disk, between edge shift quantities of said patterns and variation quantities of said recording medium surface temperature.

16. Optical disk according to claim 15,
characterized in that
said relationships represent edge shift quantities of said patterns Cn with respect to the unitary variation quantity of said recording medium surface temperature.

**Patentansprüche**

1. Verfahren zum Korrigieren eines Lochkantenintervalls einer optischen Aufzeichnungs-/Auslesevorrichtung mit den Schritten:

Einstellen einer ersten Laserleistung, Aufzeichnen eines vorbestimmten Musters B, enthaltend mehrere verschiedene Muster An, n = 1, 2, ..., N, wobei jedes eine vorbestimmte Anzahl von ansteigenden Kanten und eine vorbestimmte Anzahl von abfallenden Kanten aufweist, und Auslesen des Musters B (Schritte 81, 82);

Speichern, basierend auf einem ausgelesenen Signal des Musters B, Verhältnisse zwischen den Mustern An und Kantenverschiebebeträgen derselben in Form einer Tabelle (Schritt 82);

Einstellen der Laserleistung auf mehrere verschiedene Werte, Aufzeichnen von mehreren zueinander unterschiedlichen Mustern Cn, n = 1, 2, ..., M, durch jede der auf diese Art eingestellten Laserleistungen, und Auslesen der Muster Cn (Schritt 83);

Erhalten, basierend auf einem ausgelesenen Signal von jedem der Muster Cn, eines Kantenverschiebebetrags bezüglich eines einheitlichen Änderungsbetrags der Laserleistung (Schritt 83);

Einstellen der Laserleistung auf die erste Laserleistung (Schritt 83);

Erhalten, für jedes der Muster Cn, eines Kantenverschiebebetrags bezüglich eines einheitlichen Änderungsbetrags einer Temperatur der Plattenaufzeichnungsmediumsoberfläche einer optischen Platte (Schritt 84);

Aufzeichnen von Verhältnissen zwischen Kantenverschiebebeträgen der Muster und von Änderungsbeträgen der Temperatur der Aufzeichnungsmediumsoberfläche in einem vorbestimmten Bereich der optischen Platte (Schritt 84);

Aufzeichnen der Muster Cn vor dem Aufzeichnen von aktuellen Daten, Auslesen der Muster Cn und Durchführen einer Überprüfung, um zu bestimmen, ob eine Kantenverschiebung über einen erlaubten Bereich hinaus auftritt oder nicht (Schritt 90);

getrenntes Erhalten, abhängig von einer Größe der auftretenden Kantenverschiebung, wenn die Überprüfung ein Auftreten einer Kantenverschiebung über einen erlaubten Bereich hinaus ergibt, eines entsprechenden Änderungsbetrags der Laserleistung und eines entsprechenden Änderungsbetrags der Temperatur der Aufzeichnungsmediumsoberfläche, die beide den Mustern Cn gemein sind, basierend auf den Messungen der Kantenverschiebebeträge entsprechend der einheitlichen Änderung der Laserleistung und des einheitlichen Änderungsbetrags der Temperatur der Plattenaufzeichnungsmediumsoberfläche (Schritt 91);

Erneuern, basierend auf jeder der Änderungsbeträge, des Einstellwerts der Laserleistung (93) und von Daten der Tabelle (Schritt 94); und

Bezugnehmen, beim Aufzeichnen der aktuellen Daten, auf die Tabelle für eine Korrektur des Kantenintervalls der aktuellen Daten (Schritt 91).

2.  Verfahren nach Anspruch 1,
    dadurch gekennzeichnet, daß
    der Schritt des Aufzeichnens und Auslesens des Musters B beim Einstellen der ersten Laserleistung die folgenden Schritte enthält:

    Aufzeichnen eines vorbestimmten Musters D durch mehrere unterschiedliche Laserleistungen und Auslesen des Musters D; und

    Einstellen als erste Laserleistung eine Laserleistung, die zum Aufzeichnen verwendet wurde, wobei die Laserleistung mit einem ausgelesenen Signal des Musters D in Zusammenhang steht, das einen Kantenverschiebebetrag innerhalb eines erlaubten Bereichs aufweist (Schritt 81).

3.  Verfahren nach Anspruch 1,
    dadurch gekennzeichnet, daß
    der Schritt des Speicherns einer Tabelle von Verhältnissen zwischen den Mustern An und Kantenverschiebebeträgen ferner die folgenden Schritte enthält:

    Aufzeichnen in der Tabelle ein Muster E, das nicht als das Muster An klassifiziert ist und das die vorbestimmte Anzahl von ansteigenden Kanten und die vorbestimmte Anzahl von fallenden Kanten aufweist; und

    Erhalten eines Kantenverschiebebetrags bezüglich des Musters E durch eine Interpolation basierend auf den Kantenverschiebebeträgen der Muster An.

4.  Verfahren nach Anspruch 1,
    dadurch gekennzeichnet, daß
    der Schritt des Erhaltens eines Kantenverschiebebetrags entsprechend eines einheitlichen Änderungsbetrags der Temperatur der Aufzeichnungsmediumsoberfläche die folgenden Schritte enthält:

    Einstellen der Temperatur der Aufzeichnungsmediumsoberfläche auf mehrere verschiedene Werte, Aufzeichnen der Muster Cn durch eine vorbestimmte Laserleistung und Auslesen der Muster Cn; und

    Erhalten des Kantenverschiebebetrags entsprechend eines einheitlichen Änderungsbetrags der Temperatur der Aufzeichnungsmediumsoberfläche basierend auf einem Kantenverschiebebetrag von jedem der Muster Cn in dem Auslesesignal und des Änderungsbetrags der Temperatur der Aufzeichnungsmediumsoberfläche (Schritt 84).

5.  Verfahren nach Anspruch 4,
    dadurch gekennzeichnet, daß
    der Schritt des Erhaltens eines Kantenverschiebebetrags bezüglich eines einheitlichen Änderungsbetrags der Temperatur der Aufzeichnungsmediumsoberfläche die folgenden Schritte enthält:
    Erhalten des Kantenverschiebebetrags durch Lesen von Daten von einer optischen Scheibe, wobei die Daten vorher aufgeladen wurden und für die Muster Cn Verhältnisse zwischen dem einheitlichen Änderungsbetrag der Temperatur der Aufzeichnungsmediumsoberfläche und des Kantenverschiebebetrags darstellen (Schritt 84).

6.  Verfahren zum Korrigieren eines Lochkantenintervalls einer optischen Aufzeichnungs-/Auslesevorrichtung mit den Schritten:

    Aufzeichnen von mehreren zueinander unterschiedlichen Mustern Cn (n = 1, 2, ..., M) mit einer vorbestimmten Laserleistung, während sich die Temperatur der Aufzeichnungsmediumsoberfläche einer optischen Scheibe ändert (Schritt 83);

Aufzeichnen, in einem vorbestimmten Bereich der optischen Scheibe, Verhältnisse zwischen Kantenverschiebebeträgen der Muster und Änderungsbeträgen der Temperatur der Aufzeichnungsmediumsoberfläche (Schritt 84);

Auslesen des Verhältnisses aus der optischen Scheibe und Speichern der Verhältnisse in einem Speicher (Schritt 84);

Aufzeichnen der Muster Cn mit mehreren Laserleistungen, Auslesen der Muster Cn und Erhalten, basierend auf einem Auslesesignal, Verhältnisse zwischen den Kantenverschiebebeträgen der Muster Cn und Änderungsbeträgen der Laserleistung (83);

Wiederaufzeichnen, vor dem Schreiben der aktuellen Daten, der Muster Cn, Auslesen der Muster Cn und Überprüfen eines ausgelesenen Signals zum Bestimmen, ob eine Kantenverschiebung in demselben auftritt oder nicht (90) ;

Erhalten, abhängig von dem Betrag einer aufgetretenen Kantenverschiebung, wenn die Überprüfung ein Auftreten einer Kantenverschiebung über einen erlaubten Bereich hinaus ergibt, eines entsprechenden Änderungsbetrags der Laserleistung und einer entsprechenden Änderung der Temperatur der Aufzeichnungsmediumsoberfläche, die den Mustern Cn gemein sind, weiterhin von Verhältnissen zwischen den Änderungsbeträgen der Temperatur der Aufzeichnungsmediumsoberfläche und der Kantenverschiebebeträge der Muster Cn und von Verhältnissen zwischen Änderungsbeträgen der Laserleistung und den Kantenverschiebebeträgen der Muster Cn (Schritt 91); und

Einstellen, basierend auf dem Änderungsbetrag, der Laserleistung und eines Korrekturbetrags des Lochkantenintervalls auf optimale Werte (Schritte 93, 94).

7. Verfahren nach Anspruch 6,
dadurch gekennzeichnet, daß
der Schritt des Einstellens des Korrekturbetrags auf einen optimalen Wert die Schritte enthält:

Bilden einer Tabelle, die Verhältnisse zwischen mehreren zueinander unterschiedlichen Mustern An, n = 1, 2, ..., N, die eine vorbestimmte Anzahl von ansteigenden Kanten und eine vorbestimmte Anzahl von abfallenden Kanten aufweisen, und Verschiebebeträgen der letzten Kanten der Muster An in einem Auslesesignal (Schritt 82);

Abgleichen, beim Aufzeichnen der aktuellen Daten, eines Musters der aktuellen Daten und von in der Tabelle aufgezeichneten Mustern; und

Korrigieren, wenn der Abgleich eine Übereinstimmung ergibt, der Kantenposition des abgeglichenen Musters der Daten basierend auf dem Verschiebebetrag, der in der Tabelle registriert ist, wodurch eine thermische Interferenz eines vorher aufgezeichneten Musters gelöscht wird.

8. Verfahren nach Anspruch 6,
dadurch gekennzeichnet, daß
der Schritt des Bildens einer Tabelle ferner die folgenden Schritte enthält:

Aufzeichnen in der Tabelle eines Musters E, das unterschiedlich zu den Mustern An ist und das die vorbestimmte Anzahl von ansteigenden Kanten und die vorbestimmte Anzahl von abfallenden Kanten aufweist; und

Erhalten eines Verschiebebetrags einer letzten Kante des Musters E durch eine Interpolation basierend auf den Verschiebebeträgen der letzten Kanten des Musters An.

9. Verfahren zum Herstellen von optischen Platten mit den Schritten:

Aufzeichnen von mehreren zueinander unterschiedlichen Mustern Cn, n = 1, 2, ..., M, mit einer vorbestimmten Laserleistung, während sich die Temperatur der Aufzeichnungsmediumsoberfläche einer optischen Platte (83) ändert;

Aufzeichnen, in einem vorbestimmten Bereich der optischen Platte, von Verhältnissen zwischen Kantenverschiebebeträgen der Muster und von Änderungsbeträgen der Temperatur der Aufzeichnungsmediumsoberfläche (Schritt 84).

10. Vorrichtung zum Korrigieren eines Lochkantenintervalls einer optischen Aufzeichnungs-/Auslesevorrichtung, mit

Aufzeichnungssteuermitteln (16, 12) zum Aufzeichnen eines Signals auf einer optischen Platte mit einer für die Aufzeichnung eingestellten Laserleistung;

ersten Steuermitteln (82) zum Aufzeichnen eines vorbestimmten Musters B enthaltend mehrere unterschiedliche Muster An, n = 1, 2, ..., N, die eine vorbestimmte Anzahl von ansteigenden Kanten und eine vorbestimmte Anzahl von abfallenden Kanten aufweisen und Auslesen des Musters B;

Speichermitteln (82, 13, 17, 18, 19) zum Abspeichern, basierend auf einem Auslesesignal des Musters B, von Verhältnissen zwischen den Mustern An und Kantenverschiebebeträgen in Form einer Tabelle;

zweiten Steuermitteln (83, 16, 12) zum Aufzeichnen von mehreren zueinander unterschiedlichen Mustern Cn, n = 1, 2, ..., M, mit einer Laserleistung, die auf mehrere unterschiedliche Werte eingestellt ist und Auslesen der Muster Cn;

Mitteln (83, 22) zum Erhalten, basierend auf einem Auslesesignal von jedem der Muster Cn, eines Kantenverschiebebetrags entsprechend eines einheitlichen Änderungsbetrags der Laserleistung;

Mitteln (84, 22) zum Erhalten, für jedes der Muster Cn, eines Kantenverschiebebetrags bezüglich eines einheitlichen Änderungsbetrags der Temperatur des Plattenaufzeichnungsmediums einer optischen Platte;

Mitteln zum Aufzeichnen, in einem vorbestimmten Bereich der optischen Platte, von Verhältnissen zwischen Kantenverschiebebeträgen der Muster und Änderungsbeträgen der Temperatur der Aufzeichnungsmediumsoberfläche;

Mitteln (90, 22) zum Aufzeichnen der Muster Cn vor dem Aufzeichnen der aktuellen Daten, zum Auslesen der Muster Cn und zum Durchführen einer Überprüfung, ob eine Kantenverschiebung auftritt, die über einen erlaubten Bereich hinaus reicht, oder nicht;

Mitteln (91, 22) zum getrennten Erhalten, abhängig von einem Betrag der auftretenden Kantenverschiebung, wenn die Überprüfung in dem Auftreten einer Kantenverschiebung über einen erlaubten Bereich hinaus resultiert, eines entsprechenden Änderungsbetrags der Laserleistung und einer entsprechenden Änderung der Temperatur der Aufzeichnungsmediumsoberfläche, die dem Muster Cn gemein sind, basierend auf den Messungen des Kantenverschiebebetrags bezüglich der einheitlichen Änderung der Laserleistung und der einheitlichen Änderung des Betrags der Temperatur der Plattenaufzeichnungsmediumsoberfläche;

dritten Mitteln (22) zum Erneuern, basierend auf jedem Änderungsbetrag, des eingestellten Werts der Laserleistung (12, 16, 93) und von Daten der Tabelle; und

Mitteln (89, 19) zum Bezugnehmen, wenn die aktuellen Daten aufgezeichnet werden, auf die Tabelle und zum Korrigieren des Kantenintervalls der aktuellen Daten.

11. Vorrichtung nach Anspruch 10,
dadurch gekennzeichnet, daß
die Mittel zum Aufzeichnen und Auslesen des Musters B als Mittel zum Bestimmen der Laserleistung für die Aufzeichnung enthalten:

vierte Steuermittel (81, 12, 16) zum Aufzeichnen eines vorbestimmten Musters D über mehrere unterschiedliche Laserleistungen und zum Auslesen des Musters D; und

Mittel (12, 16, 22) zum Einstellen, als Laserleistung zum Aufzeichnen des Musters B, einer Laserleistung, die zum Aufzeichnen verwendet wird und die mit einem Auslesesignal des Musters D mit einem Kantenverschiebebetrag innerhalb des erlaubten Bereichs in Zusammenhang steht.

**12.** Vorrichtung nach Anspruch 10,
dadurch gekennzeichnet, daß
die Mittel zum Abspeichern einer Tabelle von Verhältnissen zwischen den Mustern und Kantenverschiebebeträgen
ferner enthalten:

Mittel (18, 19, 22) zum Speichern in der Tabelle eines Musters E, das nicht als das Muster An klassifiziert ist
und das die vorbestimmte Anzahl von ansteigenden Kanten und die vorbestimmte Anzahl von abfallenden
Flanken aufweist; und

Mittel (18, 19, 22) zum Erhalten eines Kantenverschiebebetrags, der mit dem Muster E über eine Interpolation
basierend auf den Kantenverschiebebeträgen der Muster An in einer Beziehung steht.

**13.** Vorrichtung nach Anspruch 10,
dadurch gekennzeichnet, daß
die Mittel zum Erhalten eines Kantenverschiebebetrags bezüglich eines einheitlichen Änderungsbetrags der Temperatur der Aufzeichnungsmediumsoberfläche enthalten:

fünfte Mittel (83) zum Einstellen der Temperatur der Aufzeichnungsmediumsoberfläche auf mehrere unterschiedliche Werte, zum Aufzeichnen des Musters Cn mit einer vorbestimmten Laserleistung und zum Auslesen
des Musters Cn; und

Mittel (84) zum Erhalten des Kantenverschiebebetrags bezüglich eines einheitlichen Änderungsbetrags der
Temperatur der Aufzeichnungsmediumsoberfläche basierend auf einem Kantenverschiebebetrag jeder der
Muster Cn eines Auslesesignals und des Änderungsbetrags der Temperatur der Aufzeichnungsmediumsoberfläche.

**14.** Vorrichtung nach Anspruch 13,
dadurch gekennzeichnet, daß
der Kantenverschiebebetrag bezüglich dem einheitlichen Änderungsbetrag der Temperatur der Aufzeichnungsmediumsoberfläche durch Auslesen von Daten aus einer optischen Platte erhalten wird, wobei die Daten vorher
in dieselbe eingebracht werden und Verhältnisse repräsentieren, für die Muster Cn, zwischen dem einheitlichen
Änderungsbetrag der Temperatur der Aufzeichnungsmediumsoberfläche und des Kantenverschiebebetrags.

**15.** Optische Platte für eine Verwendung in den Vorrichtungen/Verfahren gemäß irgendeinem der vorangehenden
Ansprüche, auf der Verhältnisse in einem vorbestimmten Bereich aufgezeichnet sind, die mit den Verhältnissen
in einer Verbindung stehen, wobei die Verhältnisse erhalten werden durch einen Aufzeichnungsvorgang von mehreren zueinander unterschiedlichen Mustern Cn, n = 1, 2, ..., M, mit einer vorbestimmten Laserleistung, während
sich die Temperatur der Aufzeichnungsmediumsoberfläche der optischen Platte ändert, zwischen Kantenverschiebebeträgen der Muster und Änderungsbeträgen der Temperatur der Aufzeichnungsmediumsoberfläche.

**16.** Optische Platte nach Anspruch 15,
dadurch gekennzeichnet, daß
die Verhältnisse Kantenverschiebebeträge der Muster Cn repräsentieren, bezüglich des einheitlichen Änderungsbetrags der Temperatur der Aufzeichnungsmediumsoberfläche.

## Revendications

**1.** Méthode de correction d'un intervalle entre bords de creux dans un dispositif d'enregistrement/lecture optique,
comportant les étapes consistant à :

établir une première puissance laser, enregistrer une configuration prédéterminée B comportant plusieurs
configurations différentes An, n = 1, 2, ..., N, ayant chacune un nombre prédéterminé de bords montants et
un nombre prédéterminé de bords descendants, et lire ladite configuration B (étape 81, 82),
mettre en mémoire, sur la base du signal de lecture de ladite configuration B, les relations existant entre
lesdites configurations An et les quantités, de décalage de bord de celles-ci sous la forme d'une table (étape
82),
établir ladite puissance laser à plusieurs valeurs différentes, enregistrer plusieurs configurations mutuellement différentes Cn, n = 1, 2, ..., M, pour chaque puissance laser ainsi établie, et lire lesdites configurations Cn (étape 83),

obtenir, sur la base du signal de lecture de chaque configuration Cn, une quantité de décalage de bord en fonction d'une quantité de variation unitaire desdites puissances laser (étape 83),

établir ladite puissance laser à ladite première puissance laser (étape 83),

atteindre, pour chacune desdites configurations Cn, une quantité de décalage de bord en fonction d'une quantité de variation unitaire de la température superficielle d'un support d'enregistrement formant disque d'un disque optique (étape 84) ;

enregistrer dans une zone prédéterminée du disque optique les relations existant entre les quantités de décalage de bord desdites configurations et les quantités de variation de ladite température superficielle de support d'enregistrement (étape 84),

enregistrer lesdites configurations Cn avant d'enregistrer des données réelles, lire lesdites configurations Cn, et contrôler pour déterminer si oui ou non un décalage de bord situé au delà d'une plage permise apparaît (étape 90),

atteindre de manière séparée, en fonction d'une quantité dedit décalage de bord apparu, lorsque ledit contrôle a pour résultat l'apparition d'un décalage de bord au delà d'une plage permise, une quantité de variation correspondante de ladite puissance laser et une variation correspondante de ladite température superficielle de support d'enregistrement toutes deux communes auxdites configurations Cn, sur la base des mesures de la quantité de décalage de bord en fonction de la variation unitaire de ladite puissance laser et de la variation unitaire de ladite quantité dedite température superficielle de support d'enregistrement formant disque (étape 91),

mettre à jour, sur la base de chaque quantité de variations, la valeur à établir de ladite puissance laser (93) et les données de ladite table (étape 94), et

référencer, lors de l'enregistrement de données réelles, ladite table et pour corriger l'intervalle entre bords des données réelles (étape 91).

2. Procédé selon la revendication 1,
   caractérisé en ce que
   ladite étape d'enregistrement et de lecture de ladite configuration B comporte, lors de l'établissement de ladite première puissance laser, les étapes consistant à :

   enregistrer une configuration prédéterminée D par plusieurs puissances laser différentes et lire ladite configuration D, et

   établir en tant que dite première puissance laser une puissance laser utilisée pour l'enregistrement, ladite puissance laser étant associée à un signal de lecture de ladite configuration D ayant une quantité de décalage de bord située à l'intérieur d'une plage admissible (étape 81).

3. Procédé selon la revendication 1,
   caractérisé en ce que
   ladite étape de mémorisation d'une table des relations existant entre lesdites configurations An et les quantités de décalage de bord comporte de plus les étapes consistant à ;

   enregistrer dans ladite table une configuration E qui n'est pas classifiée en tant que dite configuration An et qui a ledit nombre prédéterminé de bords montants et ledit nombre prédéterminé de bords tombants, et

   atteindre une quantité de décalage de bord relative à ladite configuration E par l'intermédiaire d'une interpolation basée sur la quantité de décalage de bord desdites configurations An.

4. Procédé selon la revendication 1,
   caractérisé en ce que
   ladite étape consistant à obtenir une quantité de décalage de bord en fonction d'une quantité de variation unitaire de ladite température superficielle de support d'enregistrement comporte les étapes consistant à :

   établir ladite température superficielle de support d'enregistrement à plusieurs valeurs différentes, enregistrer lesdites configurations Cn à l'aide d'une puissance laser prédéterminée, et lire lesdites configurations Cn, et

   obtenir la quantité de décalage de bord en fonction d'une quantité de variation unitaire de ladite température superficielle de support d'enregistrement sur la base d'une quantité de décalage de bord de chaque dite configuration Cn dans le signal de lecture et la quantité de variation de ladite température superficielle de support d'enregistrement (étape 84).

**5.** Procédé selon la revendication 4,

    caractérisé en ce que

    ladite étape consistant à obtenir une quantité de décalage de bord en fonction d'une quantité de variation unitaire de ladite température superficielle de support d'enregistrement comporte les étapes consistant à :

    obtenir la quantité de décalage de bord en lisant des données à partir d'un disque optique, les données étant au préalable chargées et représentant des relations, pour lesdites configurations Cn, existant entre la quantité de variation unitaire de ladite température superficielle de support d'enregistrement et la quantité de décalage de bord (étape 84).

**6.** Procédé de correction d'un intervalle entre bords de creux dans un dispositif d'enregistrement/lecture optique comportant les étapes consistant à :

    enregistrer plusieurs configurations mutuellement différentes Cn (n = 1, 2, ..., N) à l'aide d'une puissance laser prédéterminée tout en modifiant la température superficielle du support d'enregistrement d'un disque optique (étape 83),

    enregistrer dans une zone prédéterminée du disque optique, les relations existant entre des quantités de décalage de bord desdites configurations et des quantités de variation de ladite température superficielle de support d'enregistrement (étape 84),

    lire lesdites relations à partir dudit disque optique et mémoriser lesdites relations dans une mémoire (étape 84),

    enregistrer lesdites configurations Cn à l'aide de plusieurs puissances laser, lire lesdites configurations Cn, et atteindre, sur la base d'un signal de lecture, les relations existant entre les quantités de décalage de bord desdites configurations Cn et les quantités de variation de ladite puissance laser (83),

    enregistrer, avant d'écrire des données réelles, à nouveau lesdites configurations Cn, lire lesdites configurations Cn, et contrôler un signal de lecture pour déterminer si oui ou non un décalage de bord survient dans celui-ci (90),

    obtenir, en fonction d'une quantité dedit décalage de bord apparu, lorsque ledit contrôle a pour résultat l'apparition d'un décalage de bord situé au delà d'une plage permise, une quantité de variation correspondante de ladite puissance laser et une variation correspondante de ladite température superficielle de support d'enregistrement, toutes deux communes auxdites configurations Cn, les relations existant entre les quantités de variation de ladite température superficielle de support d'enregistrement et les quantités de décalage de bord desdites configurations Cn et les relations existant entre les quantités de variation de ladite puissance laser et les quantités de décalage de bord desdites configurations Cn (étape 91), et

    établir, sur la base de chaque dite quantité de variation, ladite puissance laser et une quantité de correction de l'intervalle entre bords de creux à des valeurs optimales, respectivement (étape 93, 94).

**7.** Procédé selon la revendication 6,

    caractérisé en ce que

    ladite étape consistant à établir ladite valeur de correction à une valeur optimale comporte les étapes consistant à :

    former une table représentant les relations existant entre plusieurs configurations mutuellement différentes An, n = 1, 2, ..., N, ayant chacune un nombre prédéterminé de bords montants et un nombre prédéterminé de bords descendants et des quantités de décalage des derniers bords desdites configurations An dans un signal de lecture (étape 82),

    collationner, lors de l'enregistrement de données réelles, une configuration dedites données réelles et les configurations enregistrées sur ladite table, et

    corriger, lorsque ledit collationnement a pour résultat une correspondance, la position de bord de la configuration collationnée desdites données sur la base de la quantité de décalage enregistrée dans ladite table, en annulant par conséquent une interférence thermique provenant d'une configuration enregistrée au préalable.

**8.** Procédé selon la revendication 6,

    caractérisé en ce que

    ladite étape consistant à former une table comporte de plus les étapes consistant à :

    enregistrer dans ladite table une configuration E qui est différente desdites configurations An et qui a le nombre prédéterminé de bords montants et le nombre prédéterminé de bords descendants, et

    obtenir une quantité de décalage d'un dernier bord de ladite configuration E par l'intermédiaire d'une interpolation sur la base des quantités de décalage des derniers bords desdites configurations An.

**9.** Procédé de fabrication d'un disque optique comportant les étapes consistant à :

enregistrer plusieurs configurations mutuellement différentes Cn, n = 1, 2 ..., M, à l'aide d'une puissance laser prédéterminée tout en modifiant la température superficielle du support d'enregistrement d'un disque optique (83)
enregistrer dans une zone prédéterminée du disque optique, les relations existant entre les quantités de décalage de bord desdites configurations et des quantités de variation de ladite température superficielle de support d'enregistrement (étape 84).

**10.** Dispositif pour corriger un intervalle entre bords de creux dans un dispositif d'enregistrement/lecture optique comportant :

des moyens de commande d'enregistrement (16, 12) pour enregistrer un signal sur un disque optique à l'aide d'une puissance laser établie pour l'enregistrement,
des premiers moyens de commande (82) pour enregistrer une configuration prédéterminée B comportant plusieurs configurations différentes An, n = 1, 2, ..., N, ayant chacune un nombre prédéterminé de bords montants et un nombre prédéterminé de bords descendants et lire ladite configuration B,
des moyens de mémorisation (82, 13, 17, 18, 19) pour mémoriser dans ceux-ci, sur la base d'un signal de lecture de ladite configuration B, les relations existant entre lesdites configurations An et les quantités de décalage de bord de celles-ci sous forme d'une table,
des deuxièmes moyens de commande (83, 16, 12) pour enregistrer plusieurs configurations mutuellement différentes Cn, n = 1, 2, ..., M, à l'aide d'une puissance laser établie à plusieurs valeurs différentes et lire lesdites configurations Cn,
des moyens (83, 22) pour obtenir sur la base d'un signal de lecture de chaque dite configuration Cn, une quantité de décalage de bord fonction d'une quantité de variation unitaire de ladite puissance laser,
des moyens (84, 22) pour atteindre, pour chaque configuration Cn, une quantité de décalage de bord en fonction d'une quantité de variation unitaire de la température superficielle de support d'enregistrement d'un disque optique,
des moyens pour enregistrer, dans une zone prédéterminée du disque optique les relations existant entre les quantités de décalage de bord desdites configurations et les quantités de variation de ladite température superficielle de support d'enregistrement,
des moyens (90, 22) pour enregistrer lesdites configurations Cn avant d'enregistrer des données réelles, lire lesdites configurations Cn et contrôler pour déterminer si oui ou non apparaît un décalage de bord situé au delà d'une plage permise,
des moyens (91, 22) pour atteindre de manière séparée, en fonction d'une quantité dedit décalage de bord apparu, lorsque ledit contrôle a pour résultat l'apparition d'un décalage de bord au delà d'une plage permise, une quantité de variation correspondante dedite puissance laser et une variation correspondante dedite température superficielle de support d'enregistrement, toutes deux étant communes auxdites configurations Cn, sur la base des mesures de la quantité de décalage de bord en fonction de la variation unitaire de la dite puissance laser et de la variation unitaire de ladite quantité de ladite température superficielle de support d'enregistrement de disque,
des troisièmes moyens (22) pour mettre à jour sur la base de chaque dite quantité de variation, les valeurs à établir de ladite puissance laser (12, 16, 93) et les données de ladite table, et
des moyens (89, 19) pour référencer, lors de l'enregistrement de données réelles, ladite table et pour corriger l'intervalle entre bords des données réelles.

**11.** Dispositif selon la revendication 10,
caractérisé en ce que
lesdits moyens pour enregistrer et lire ladite configuration B comportent, en tant que moyens pour déterminer une puissance laser pour l'enregistrement :

des quatrièmes moyens de commande (81, 12, 16) pour enregistrer une configuration prédéterminée D par plusieurs puissances laser différentes et lire ladite configuration D, et
des moyens (12, 16, 22) pour établir, en tant que puissance laser pour enregistrer la configuration B, une puissance laser qui est utilisée pour l'enregistrement et qui est associée à un signal de lecture de ladite configuration D ayant une quantité de décalage de bord située à l'intérieur d'une plage permise.

**12.** Dispositif selon la revendication 10,

caractérisé en ce que

lesdits moyens pour mémoriser une table de relation entre lesdites configurations et les quantités de décalage de bord comportent de plus :

des moyens pour enregistrer sur ladite table une configuration E qui n'est pas classifiée comme dite configuration An et qui a ledit nombre prédéterminé de bords montants et ledit nombre prédéterminé de bords tombants, et

des moyens (18, 19, 22) pour atteindre une quantité de décalage de bord relative à ladite configuration E par l'intermédiaire d'une interpolation sur la base des quantités de décalage de bord desdites configurations An.

13. Dispositif selon la revendication 10,

caractérisé en ce que

lesdits moyens pour obtenir une quantité de décalage de bord en fonction d'une quantité de variation unitaire de ladite température superficielle de support d'enregistrement comportent :

des cinquième moyens (83) pour établir ladite température superficielle de support d'enregistrement à plusieurs valeurs différentes, enregistrer lesdites configurations Cn à l'aide d'une puissance laser prédéterminée, et lire lesdites configurations Cn, et

des moyens (84) pour obtenir la quantité de décalage de bord en fonction d'une quantité de variation unitaire de ladite température superficielle de support d'enregistrement sur la base d'une quantité de décalage de bord de chaque dite configuration Cn dans le signal de lecture et de la quantité de variation de ladite température superficielle de support d'enregistrement.

14. Dispositif selon la revendication 13,

caractérisé en ce que

la quantité de décalage de bord en fonction de la quantité de variation unitaire de ladite température superficielle de support d'enregistrement est obtenue en lisant des données à partir d'un disque optique, les données étant chargées au préalable dans celui-ci et représentant les relations, pour lesdites configurations Cn, existant entre la quantité de variation unitaire de ladite température superficielle de support d'enregistrement et la quantité de décalage de bord.

15. Disque optique destiné à être utilisé dans l'un quelconque des dispositifs/procédés selon l'une quelconque des revendications précédentes sur lequel des relations sont enregistrées dans une zone prédéterminée de celui-ci associée auxdites relations, lesdites relations étant obtenues, par l'intermédiaire d'une opération d'enregistrement de plusieurs configurations mutuellement différentes Cn, n = 1, 2, ..., M, avec une puissance laser prédéterminée tout en modifiant la température superficielle de support d'enregistrement du disque optique, entre des quantités de décalage de bord desdites configurations et des quantités de variation de ladite température superficielle de support d'enregistrement.

16. Disque optique selon la revendication 15,

caractérisé en ce que

lesdites relations représentent les quantités de décalage de bord desdites configurations Cn en fonction de la quantité de variation unitaire de ladite température de superficielle de support d'enregistrement.

# F I G. I

| DATA | | |
|---|---|---|

# F I G. 2

# FIG. 3

FIG. 4

CHARACTERISTIC MEASUREMENT MODE SIGNAL 506
CHARACTERISTIC MEASUREMENT MODE SIGNAL 507

READ-OUT BINARY SIGNAL 7

508

501

INPULSE SIGNAL GENERATOR CIRCUIT

FLIP-FLOP

509

ANALOG SWITCH 510

INTEGRATION REFERENCE SIGNAL 504

503

505

A/D CONVERTER

502

POLARITY INVERSION TIMING SIGNAL I5

POLARITY INVERSION INTERVAL SIGNAL I4

FIG. 5

READ-OUT
BINARY SIGNAL 7

POLARITY INVERSION
TIMING SIGNAL 15

OUTPUT FROM
OR CIRCUIT 508

INTEGRATED
SIGNAL 505

POLARITY INVERSION
INTERVAL SIGNAL 14

$T_1$  $T_2$  $T_3$

$D_1$  $D_2$  $D_3$

## FIG. 6

# FIG. 7

FIG. 8A

# FIG. 8B

SECOND RECORD PATTERN

THIRD PATTERN

EP 0 477 892 B1

FIG. 9

## FIG. 10

## FIG. 11A

## FIG. 11B

# F I G. 12

51 — r = 0

52 — q = 0

53 — p = 0

54 — $T(p,q,r) = 0$ ?

YES → INTEROLATION OF $T(p,q,r)$ — 55

NO

56 — p = p + 1

57 — p = Np ?  NO

YES

58 — q = q + 1

59 — q = Nq ?  NO

YES

60 — r = r + 1

61 — r = Nr ?  NO

YES

END

# FIG. 13

INTERPOLATION OF T(p,q,r) — 55

SEARCH FOR $(p_1,q_1,r_1)$ SATISFYING $T(p_1,q_1,r_1)\neq 0$, $p_1>p, q_1>q, r_1>r$ AND HAVING MINIMUM DISTANCE TO $(p,q,r)$ — 71

SEARCH FOR $(p_2,q_2,r_2)$ SATISFYING $T(p_2,q_2,r_2)\neq 0$, $p_2>p, q_2>q, r_2>r$ AND HAVING MINIMUM DISTANCE TO $(p,q,r)$ — 72

SEARCH FOR $(p_3,q_3,r_3)$ SATISFYING $T(p_3,q_3,r_3)\neq 0$ $p_3>p, q_3>q, r_3>r$ AND HAVING MINIMUM DISTANCE TO $(p,q,r)$ — 73

SEARCH FOR $(p_4,q_4,r_4)$ SATISFYING $T(p_4,q_4,r_4)\neq 0$ $p_4>p, q_4>q, r_4>r$ AND HAVING MINIMUM DISTANCE TO $(p,q,r)$ — 74

SEARCH FOR $(p_5,q_5,r_5)$ SATISFYING $T(p_5,q_5,r_5)\neq 0$ $p_5>p, q_5>q, r_5>r$ AND HAVING MINIMUM DISTANCE TO $(p,q,r)$ — 75

SEARCH FOR $(p_6,q_6,r_6)$ SATISFYING $T(p_6,q_6,r_6)\neq 0$ $p_6>p, q_6>q, r_6>r$ AND HAVING MINIMUM DISTANCE TO $(p,q,r)$ — 76

SEARCH FOR $(p_7,q_7,r_7)$ SATISFYING $T(p_7,q_7,r_7)\neq 0$ $p_7>p, q_7>q, r_7>r$ AND HAVING MINIMUM DISTANCE TO $(p,q,r)$ — 77

SEARCH FOR $(p_8,q_8,r_8)$ SATISFYING $T(p_8,q_8,r_8)\neq 0$ $p_8>p, q_8>q, r_8>r$ AND HAVING MINIMUM DISTANCE TO $(p,q,r)$ — 78

$$T(p,q,r) = \frac{1}{64}\sum_{i=1}^{8}\left\{(p_i-p)^2+(q_i-q)^2+(r_i-r)^2\right\}^{1/2}$$
$$\times \sum_{i=1}^{8}\frac{T(p_i,q_i,r_i)}{\left\{(p_i-p)^2+(q_i-q)^2+(r_i-r)^2\right\}^{1/2}}$$
— 79

END

FIG. 14

EP 0 477 892 B1

# FIG. 15

RECORD SIGNAL I
(BEFORE COR-
RECTION )

$l_1$ $l_{i-1}$ $b_{i-1}$ $l_i$

$E_1$ $F_{i-1}$ $E_{i-1}$ $F_i$ $E_i$

RECORD SIGNAL 2
(AFTER CORREC-
TION )

$l_{i-1}+F_{i-1}-E_{i-1}$ $b_{i-1}+E_{i-1}-F_i$ $l_i+F_i-E_i$

READ-OUT SIGNAL
(AFTER BINA-
RIZATION )

# FIG. 16A

Adr. I

$l_{i-1}+F_{i-1}-E_{i-1}$

Adr. 3

Adr. 2

# FIG. 16B

Adr. 3

$l_i+F_i$

Adr. 2

$l_i+F_i-E_i$

$b_{i-1}+E_{i-1}-F_i$

# FIG. 17

PULSE SIGNAL 1016

FROM CONTROLLER

FROM CONTROLLER

D/A CONVERTER

1110

1112

1108

1111

1109

-V

CHARACTERISTIC MODE SIGNAL 506

POWER/PULSE WIDTH SIGNAL 701

OUTPUT SIGNAL FROM FLIP FLOP 707

OUTPUT SIGNAL FROM COUNTER 705

FROM CONTROLLER

FROM CONTROLLER

CLK

D-LATCH

A B S OUT

A B S OUT

A B S OUT

A B S OUT

EP 0 477 892 B1

# F I G. 18

# FIG. 19

QUANTITY OF VARIATION OF RECORDING MEDIUM SURFACE TEMPERATURE (ΔT)

LINES OF EQUAL EDGE SHIFT QUANTITY (PATTERN 1)

LINES OF EQUAL EDGE SHIFT QUANTITY (PATTERN 1)

LINES OF EQUAL EDGE SHIFT QUANTITY (PATTERN 1)

LINES OF EQUAL EDGE SHIFT QUANTITY (PATTERN 1)

MEASURED VALUE

LINES OF EQUAL EDGE SHIFT QUANTITY (PATTERN 2)

COMPONENTS OF RECORDING MEDIUM SURFACE TEMPERATURE VARIATION

LINES OF EQUAL EDGE SHIFT QUANTITY (PATTERN 2)

LINES OF EQUAL EDGE SHIFT QUANTITY (PATTERN 2)

RECORDING POWER VARIATION COMPONENTS

RECORDING POWER VARIATION QUANTITY (ΔP)

EP 0 477 892 B1

# F I G. 20